# EUROPÄISCHE PATENTSCHRIFT

(11) **EP 3 645 329 B1**
(45) Veröffentlichungstag und Bekanntmachung des Hinweises auf die Patenterteilung: **09.06.2021**
(21) Anmeldenummer: 18733864.5
(22) Anmeldetag: 25.06.2018
(51) Int. Cl.: B60K 15/03, B60K 15/04, B67D 7/36, G01F 23/00

(54) **DETEKTIEREN DES ABSCHALTENS EINER BEFÜLLEINRICHTUNG**
DECTECTING THE SWITCH-OFF OF A FILLING DEVICE
DÉTECTION DE LA MISE À L'ARRÊT D'UN DISPOSITIF DE REMPLISSAGE

(30) Priorität: 27.06.2017 DE 102017114270
(43) Veröffentlichungstag der Anmeldung: 06.05.2020
(73) Patentinhaber: Kautex Textron GmbH & Co. KG, 53229 Bonn (DE)
(72) Erfinder: WIND, Stefan, 53773 Hennef (DE); BARKOW, Axel, 50354 Hürth (DE)
(74) Vertreter: Richly & Ritschel Patentanwälte PartG mbB
(86) Internationale Anmeldenummer: PCT/EP2018/066892
(87) Internationale Veröffentlichungsnummer: WO 2019/002176

(56) Entgegenhaltungen:
- EP-A1- 2 098 837
- WO-A1-01/61429
- WO-A1-91/10888
- WO-A2-2010/091403
- DE-A1-102010 030 847
- DE-A1-102011 056 173
- DE-A1-102012 215 635
- DE-U1-202011 103 041
- JP-A- H08 127 339
- US-A1- 2006 225 709
- US-B1- 6 230 558
- US-B1- 7 448 367

## Beschreibung

Die vorliegende Erfindung betrifft ein Verfahren zum Detektieren eines Abschaltens einer Befülleinrichtung bei einem Befüllvorgang eines Betriebsflüssigkeitsbehälters. Ferner betrifft die vorliegende Erfindung ein Betriebsflüssigkeitsbehältersystem, mittels dem ein Abschalten einer Befülleinrichtung bei einem Befüllvorgang eines Betriebsflüssigkeitsbehälters detektierbar ist.

Im Folgenden wird auf als Kraftstoffbehälter bzw. als Kraftstofftanks ausgebildete Betriebsflüssigkeitsbehälter und auf als Kraftstoffbehältersysteme ausgebildete Betriebsflüssigkeitsbehältersysteme Bezug genommen. Betriebsflüssigkeitsbehälter im Sinne der Erfindung sind insbesondere aber nicht ausschließlich Kraftstoffbehälter (für Ottokraftstoffe oder Dieselkraftstoffe), Harnstoffbehälter, Wischwasserbehälter, Ölbehälter, Nebenflüssigkeitsbehälter oder Additivbehälter jeweils für Kraftfahrzeuge. Betriebsflüssigkeitsbehälter der eingangs genannten Art werden häufig durch Extrusionsblasformen hergestellt, wobei sich insbesondere HDPE (High Density Polyethylene) für die Herstellung extrusionsblasgeformter Behälter eignet. Ferner ist es möglich, entsprechende Betriebsflüssigkeitsbehälter mittels eines Spritzgießverfahrens herzustellen. Weiterhin können auch aus Metall gebildete Betriebsflüssigkeitsbehälter verwendet werden.

Aus dem Stand der Technik ist es bekannt, dass zum Entlüften eines Kraftstoffbehälters dieser zumindest ein Entlüftungsventil aufweist, das wiederum mit einer Entlüftungsleitung zum Ableiten des Überdrucks an die Atmosphäre fluidverbunden ist. Insbesondere bei für Ottokraftstoff ausgebildeten Kraftstoffbehältern sind deren Entlüftungsleitungen häufig mit Aktivkohlefiltern zum Durchleiten und Ausfiltern von Treibstoffdämpfen fluidverbunden. Die durch das Aktivkohlefilter gefilterten Gase werden nach Passieren des Aktivkohlefilters an die Atmosphäre abgegeben. Beim Betanken eines Kraftstoffbehälters befindet sich das Entlüftungsventil in dessen Offenstellung, damit beim Betanken aus dem Kraftstoffbehälter ausgetriebenes Gas (Kraftstoffdampf-Luft-Gemisch) an die Atmosphäre - gegebenenfalls durch ein Aktivkohlefilter gefiltert - abgeleitet werden kann. Ein Befüllstopp bzw. Betankungsstopp wird derart eingeleitet, dass das Entlüftungsventil durch den im Kraftstoffbehälter ansteigenden Kraftstoff verschlossen wird, wodurch ein Ableiten der sich im Kraftstoffbehälter befindlichen Gase/Dämpfe über das Entlüftungsventil unterbunden wird. Durch weiteres Einleiten von Kraftstoff über ein in den Kraftstoffbehälterinnenraum mündendes Einfüllrohr steigt der Druck innerhalb des Kraftstoffbehälters an, so dass auch ein Kraftstoffpegel innerhalb des Einfüllrohrs ansteigt, bis der Kraftstoffpegel ein in das Einfüllrohr eingestecktes Zapfventil verschließt, woraufhin seitens des Zapfventils ein Ausströmen von Kraftstoff beendet wird.

Aus dem Stand der Technik WO 01/61429 A1, EP 2 098 837 A1, JP H08 127339 A, US 6 230 558 B1 und JP 2010 236673 sind Betriebsflüssigkeitsbehältersysteme und Verfahren bekannt.

Um einen Betankungsprozess bzw. Befüllvorgang präziser durchführen zu können und um mehr Einfluss bei dem Befüllvorgang zu haben, ist es von großem Nutzen, ein Abschalten der Befülleinrichtung bzw. des Befüllventils detektieren zu können.

Aus dem Stand der Technik ist kein Verfahren und kein Betriebsflüssigkeitsbehältersystem bekannt, bei dem ein Abschalten einer Zapfeinrichtung, die beispielsweise in Form eines Zapfventils ausgebildet sein kann, detektiert wird. Vielmehr wird bei den aus dem Stand der Technik bekannten Betriebsflüssigkeitsbehältersystemen bei einem Schließen eines Betankungsentlüftungsventils einfach davon ausgegangen, dass die Befülleinrichtung zeitversetzt nach dem Schließen des Betankungsentlüftungsventils eine Ausgabe von Betriebsflüssigkeit beendet.

Der vorliegenden Erfindung liegt die Aufgabe zugrunde, ein Verfahren zum Detektieren des Abschaltens einer Befülleinrichtung bereitzustellen. Ferner liegt der vorliegenden Erfindung die Aufgabe zugrunde, ein Betriebsflüssigkeitsbehältersystem bereitzustellen, dass dazu ausgebildet ist, ein Abschalten einer Befülleinrichtung während eines Befüllvorganges zu detektieren. Die der vorliegenden Erfindung zugrundeliegenden Aufgaben werden durch die unabhängigen Ansprüche gelöst. Vorteilhafte Ausgestaltungen sind in den abhängigen Ansprüchen beschrieben.

Im Genaueren wird die der vorliegenden Erfindung zugrundeliegende Aufgabe durch ein Verfahren zum Detektieren eines Abschaltens einer Befülleinrichtung bei einem Befüllvorgang eines Betriebsflüssigkeitsbehälters gelöst, wobei ein Betriebsflüssigkeitsbehälterinnenraum des Betriebsflüssigkeitsbehälters über ein in diesen mündendes Einfüllrohr mit einer Betriebsflüssigkeit befüllbar ist, und wobei in dem Einfüllrohr ein Drucksensor zur Bestimmung eines Drucks innerhalb des Einfüllrohrs angeordnet ist. Das erfindungsgemäße Verfahren weist dabei einen Verfahrensschritt zum Ermitteln des zeitlichen Verlaufs von mittels des Drucksensors ermittelten Druckwerten und ein Verfahrensschritt zum Ausgeben eines Befüllstopp-Signals in Abhängigkeit des zeitlichen Verlaufs der Druckwerte auf. Mittels des erfindungsgemäßen Verfahrens lässt sich ein Befüllstopp einer Befülleinrichtung, die beispielsweise als Zapfventil einer Zapfsäule ausgebildet sein kann, zuverlässig bestimmen. Somit lässt sich mittels des erfindungsgemäßen Verfahrens die Abschaltfunktion eines Zapfventils überprüfen, wodurch die Sicherheit bei einem Befüllvorgang erhöht wird. Ferner ist mittels des erfindungsgemäßen Verfahrens die Anzahl von Tankversuchen durch Zählen der Abschaltungen bestimmbar. Die Anzahl der Tankversuche kann als Eingangsgröße in einer Steuerung verarbeitet/verwendet werden. Ferner kann eine Steuerung einen nächsten Tankvorgang gezielt vorbereiten. Beispielsweise kann ein definiertes Nachtanken einer bestimmten Kraftstoffmenge realisiert werden. Ferner bietet das erfindungsgemäße Verfahren den Vorteil, dass Betankungsvorgänge spezifisch nach Kundenanforderung ausgelegt werden können. Beispielsweise lässt sich nach dem Detektieren eines ersten Abschaltvorganges die Anzahl der Nachtankversuche einstellen. Ferner lässt das erfindungsgemäße Verfahren aufgrund der genauen Bestimmung der Tankversuche zuverlässig Rückschlüsse auf ein Tankverhalten eines Endnutzers/Betankers zu.

Bei einem Befüllvorgang wird der Betriebsflüssigkeitsbehälterinnenraum mittels einer in einen Einfüllstutzen des Einfüllrohrs eingesetzten Befülleinrichtung mit Betriebsflüssigkeit befüllt. Bei der Befülleinrichtung handelt es sich vorzugsweise um ein Zapfventil einer Zapfsäule. Mittels des erfindungsgemäßen Verfahrens ist es jedoch auch möglich, einen Befüllstopp zu detektieren, wenn der Betriebsflüssigkeitsbehälter beispielsweise mittels eines Nachfüllgebindes befüllt wird.

Die mittels des Drucksensors ermittelten Druckwerte werden vorzugsweise derart gespeichert, dass einem jeden Zeitpunkt während eines Ermittlungszeitraumes/Aufzeichnungszeitraumes ein Druckwert zugeordnet ist. Folglich werden die Druckwerte vorzugsweise in einer Tabelle gespeichert. Eine Aufzeichnung bzw. Speicherung der Druckwerte wird vorzugsweise durch Ermitteln eines Befüllvorganges eingeleitet. Vorzugsweise wird ein Befüllvorgang durch einen Sensor im Einfüllrohr, vorzugsweise in einem Einfüllstutzen des Einfüllrohrs detektiert. Dieser kann beispielsweise ein Einführen eines Zapfventils oder einer anderen Befülleinrichtung in das Einfüllrohr detektieren.

Die Druckwerte werden vorzugsweise in regelmäßigen zeitlichen Abständen ermittelt und gespeichert.

Vorzugsweise ist das Verfahren derart ausgebildet, das ein Warnsignal in Abhängigkeit des zeitlichen Verlaufs der Druckwerte ausgegeben wird. Bei dem Warnsignal handelt es sich vorzugsweise um ein akustisches und/oder optisches Warnsignal. Das Warnsignal kann vorzugsweise auf ein mobiles Endgerät, das vorzugsweise als Mobiltelefon ausgebildet ist, übertragen werden. Ferner ist es auch möglich, dass das Warnsignal von beispielsweise einer Hupe oder einer anderen tonerzeugenden Vorrichtung des Fahrzeugs, in dem der Betriebsflüssigkeitsbehälter eingebaut ist, ausgegeben wird. Weiterhin ist es vorzugsweise möglich, dass ein optisches Warnsignal von einer Anzeigeeinrichtung des Fahrzeugs angezeigt wird.

Vorzugsweise ist das Verfahren derart ausgebildet, dass dieses folgende Verfahrensschritte aufweist:
- Ermitteln von zumindest zwei Druckwerten innerhalb einer ersten Zeitperiode innerhalb des Einfüllrohrs mittels des Drucksensors;
- Ermitteln von zumindest zwei weiteren Druckwerten innerhalb einer der ersten Zeitperiode zeitlich nachfolgenden zweiten Zeitperiode innerhalb des Einfüllrohrs mittels des Drucksensors;
- Bestimmen einer ersten Differenz zwischen den innerhalb der ersten Zeitperiode ermittelten Druckwerten;
- Bestimmen einer zweiten Differenz zwischen den innerhalb der zweiten Zeitperiode ermittelten Druckwerten; und
- Ausgeben eines Befüllstopp-Signals, wenn der Absolutwert der zweiten Differenz kleiner ist als der Absolutwert der ersten Differenz.

Durch eine entsprechende Ausbildung des Verfahrens lässt sich ein Abschalten einer Einfülleinrichtung auf sehr einfache Art und Weise mit lediglich einer geringen Anzahl ermittelter Druckwerte zuverlässig ermitteln. Während der ersten Zeitperiode gibt die Befülleinrichtung Betriebsflüssigkeit aus, so dass der der Betriebsflüssigkeitsbehälter während der ersten Zeitperiode mit Betriebsflüssigkeit befüllt wird. Die mittels des Drucksensors innerhalb des Einfüllrohrs ermittelten Druckwerte ergeben sich während der ersten Zeitperiode daher aus dem statischen Druck innerhalb des Einfüllrohrs und dem dynamischen Druck, der durch die Bewegung der Betriebsflüssigkeit innerhalb des Einfüllrohrs bedingt ist. Während der zweiten Zeitperiode gibt die Befülleinrichtung keine Betriebsflüssigkeit aus, da aufgrund einer ansteigenden Betriebsflüssigkeitssäule innerhalb des Einfüllrohrs ein Ausschaltmechanismus (beispielsweise eine Schnüffelbohrung) der Befülleinrichtung durch die Betriebsflüssigkeit betätigt/verschlossen wird. Folglich fließt während der zweiten Zeitperiode keine Betriebsflüssigkeit über das Einfüllrohr in den Betriebsflüssigkeitsbehälterinnenraum, so dass der innerhalb des Einfüllrohrs angeordnete Drucksensor lediglich den statischen Druck innerhalb des Einfüllrohrs ermittelt. Der statische Druck weist ein geringeres Rauschen als der dynamische Druck auf, so dass der Absolutwert der zweiten Differenz während der zweiten Zeitperiode kleiner ist als der Absolutwert der ersten Differenz während der ersten Zeitperiode.

Selbstverständlich kann das Verfahren auch so ausgebildet sein, dass innerhalb der ersten Zeitperiode und innerhalb der zweiten Zeitperiode mehr als jeweils zwei Druckwerte ermittelt werden. In diesem Fall weist das Verfahren dann folgende Verfahrensschritte auf:
- Ermitteln einer Vielzahl von Druckwerten innerhalb einer ersten Zeitperiode innerhalb des Einfüllrohrs mittels des Drucksensors;
- Ermitteln einer Vielzahl weiteren Druckwerten innerhalb einer der ersten Zeitperiode zeitlich nachfolgenden zweiten Zeitperiode innerhalb des Einfüllrohrs mittels des Drucksensors;
- Bestimmen einer ersten Differenz zwischen dem größten innerhalb der ersten Zeitperiode ermittelten Druckwert und dem kleinsten innerhalb der ersten Zeitperiode ermittelten Druckwert;
- Bestimmen einer zweiten Differenz zwischen dem größten innerhalb der zweiten Zeitperiode ermittelten Druckwert und dem kleinsten innerhalb der zweiten Zeitperiode ermittelten Druckwert; und
- Ausgeben eines Befüllstopp-Signals, wenn der Absolutwert der zweiten Differenz kleiner ist als der Absolutwert der ersten Differenz.

Vorzugsweise wird das Befüllstopp-Signal lediglich ausgegeben, wenn der Absolutwert der zweiten Differenz kleiner als die Hälfte des Absolutwertes der ersten Differenz ist. Weiter vorzugsweise wird das Befüllstopp-Signal lediglich ausgegeben, wenn der Absolutwert der zweiten Differenz kleiner als ein Viertel des Absolutwertes der ersten Differenz ist. Weiter vorzugsweise wird das Befüllstopp-Signal lediglich ausgegeben, wenn der Absolutwert der zweiten Differenz kleiner als ein Achtel des Absolutwertes der ersten Differenz ist.

Die jeweiligen Absolutwerte der ersten Differenz und der zweiten Differenz stellen jeweils die absoluten Beträge der ersten Differenz bzw. der zweiten Differenz dar und sind daher stets positive reelle Zahlen.

Weiter vorzugsweise ist das Verfahren derart ausgebildet, dass es folgende Verfahrensschritte aufweist:
- Ermitteln einer Vielzahl von ersten Druckwerten innerhalb einer ersten Zeitperiode;
- Bestimmen eines ersten Signal-Rausch-Verhältnisses basierend auf der Vielzahl der ersten Druckwerte;
- Ermitteln einer Vielzahl von zweiten Druckwerten innerhalb einer der ersten Zeitperiode zeitlich nachfolgenden zweiten Zeitperiode;
- Bestimmen eines zweiten Signal-Rausch-Verhältnisses basierend auf der Vielzahl der zweiten Druckwerte; und
- Ausgeben eines Befüllstopp-Signals, wenn das zweite Signal-Rausch-Verhältnis größer ist als das erste Signal-Rausch-Verhältnis.

Mittels des entsprechend ausgebildeten Verfahrens lässt sich ein Befüllstopp der Befülleinrichtung nochmals zuverlässiger mit einer erhöhten Genauigkeit bestimmen.

Unter einer Vielzahl von ersten Druckwerten und zweiten Druckwerten sind zumindest zwei erste Druckwerte und zwei zweite Druckwerte zu verstehen.

Das Signal-Rausch-Verhältnis ist definiert als das Verhältnis der vorhandenen mittleren Signalleistung P_{Signal} zur vorhandenen mittleren Rauschleistung P_{Rauschen} (dem Integral der spektralen Rauschleistungsdichte über die Bandbreite), wobei der Ursprung der Rauschleistung nicht berücksichtigt wird. Es ist also: SNR = Nutzsignalleistung/Rauschleistung = P_{Signal}/P_{Rauschen}.

Vorzugsweise wird das Befüllstopp-Signal lediglich ausgegeben, wenn das zweite Signal-Rausch-Verhältnis zumindest doppelt so groß wie das erste Signal-Rausch-Verhältnis ist. Weiter vorzugsweise wird das Befüllstopp-Signal lediglich ausgegeben, wenn das zweite Signal-Rausch-Verhältnis zumindest dreimal so groß wie das erste Signal-Rausch-Verhältnis ist. Weiter vorzugsweise wird das Befüllstopp-Signal lediglich ausgegeben, wenn das zweite Signal-Rausch-Verhältnis zumindest viermal so groß wie das erste Signal-Rausch-Verhältnis ist.

Anstelle des Signal-Rausch-Verhältnisses kann auch das SpitzenSignal-Rausch-Verhältnis oder das Träger-Rausch-Verhältnis zur Durchführung des Verfahrens herangezogen werden.

Vorzugsweise ist das Verfahren derart ausgebildet, dass es folgende Verfahrensschritte aufweist:
- Ermitteln einer Vielzahl von ersten Druckwerten innerhalb einer ersten Zeitperiode;
- Ermitteln eines ersten Frequenzspektrums basierend auf den ersten Druckwerten;
- Ermitteln einer Vielzahl von zweiten Druckwerten innerhalb einer der ersten Zeitperiode zeitlich nachfolgenden zweiten Zeitperiode;
- Ermitteln eines zweiten Frequenzspektrums basierend auf den zweiten Druckwerten; und
- Ausgeben eines Befüllstopp-Signals wenn das zweite Frequenzspektrum sich von dem ersten Frequenzspektrum unterscheidet.

Da sich während der ersten Zeitperiode der Druck innerhalb des Einfüllrohrs durch eine Überlagerung des statischen Drucks, der durch die Betriebsflüssigkeitssäule innerhalb des Einfüllrohrs und dem Atmosphärendruck bedingt ist, und des dynamischen Drucks ergibt, der durch die Bewegung der Betriebsflüssigkeit im Einfüllrohr bedingt ist, hingegen der Druck innerhalb des Einfüllrohrs während der zweiten Zeitperiode lediglich durch den statischen Druck bedingt ist, verändert sich das Frequenzspektrum der Druckwerte entsprechend. Somit lassen sich durch Bestimmung der Frequenzspektren während der ersten Zeitperiode und während der zweiten Zeitperiode und durch Vergleich bestimmter Frequenzbereiche, die für den dynamischen Druck charakteristisch sind, Rückschlüsse ziehen, ob Betriebsflüssigkeit durch das Einfüllrohr fließt. Wenn beispielsweise für eine Fließbewegung von Betriebsflüssigkeit innerhalb des Einfüllrohrs charakteristische Frequenzen im Frequenzspektrum nicht vorhanden sind, dann gibt die Befülleinrichtung keine Betriebsflüssigkeit mehr aus, so dass dann das Befüllstopp-Signal ausgegeben wird. Das Frequenzspektrum in der ersten Zeitperiode weist höhere Frequenzen auf als das Frequenzspektrum in der zweiten Zeitperiode.

Die Frequenzspektren werden vorzugsweise mittels einer Fourier-Transformation der Druckwerte erzeugt.

Vorzugsweise ist das Verfahren derart ausgebildet, dass es einen Verfahrensschritt zum Ermitteln aufweist, ob die Druckwerte ein absolutes Maximum und ein diesem in einem ersten zeitlichen Abstand folgendes absolutes Minimum aufweisen, und ferner einen Verfahrensschritt zum Ausgeben des Befüllstopp-Signals, wenn der erste zeitliche Abstand kürzer als eine vorbestimmte Zeitperiode ist.

Wenn die Befülleinrichtung das Ausgeben von Betriebsflüssigkeit beendet, dann geht diesem Beenden ein Schließen eines den Betriebsflüssigkeitsbehälterinnenraum mit der Atmosphäre fluidverbindendes Entlüftungsventils voraus, so dass der Betriebsflüssigkeitsbehälterinnenraum nicht mehr entlüftet werden kann. Folglich steigt aufgrund des ansteigenden Drucks im Betriebsflüssigkeitsbehälterinnenraum eine Betriebsflüssigkeitssäule im Einfüllrohr an, bis ein Abschaltmechanismus der Befülleinrichtung (z.B. Schnüffelbohrung bei einem Zapfventil) betätigt wird. Der Pegel der Betriebsflüssigkeitssäule im Einfüllrohr ist beim Abschalten der Einfülleinrichtung (des Zapfventils) höher als der Pegel der Betriebsflüssigkeit im Betriebsflüssigkeitsbehälter. Daher fließt Betriebsflüssigkeit trotz verschlossenem Entlüftungsventil weiter aus dem Einfüllrohr in den Betriebsflüssigkeitsbehälterinnenraum, wobei der Druck im Betriebsflüssigkeitsbehälterinnenraum weiter ansteigt. Das unter Druck stehende Gas innerhalb des Betriebsflüssigkeitsbehälterinnenraums wirkt wie eine Feder und treibt die Betriebsflüssigkeit aus dem Betriebsflüssigkeitsbehälterinnenraum zurück in das Einfüllrohr. Dies führt zu einer gedämpften oszillierenden Bewegung der Betriebsflüssigkeit zwischen dem Betriebsflüssigkeitsbehälterinnenraum und dem Einfüllrohr, die wiederum zu Druckschwankungen innerhalb des Einfüllrohrs führt. Das absolute Maximum entspricht dabei dem vom Drucksensor ermittelten Druck direkt bei der Abschaltung der Befülleinrichtung, da zu diesem Zeitpunkt der Pegel der Betriebsflüssigkeit im Einfüllrohr maximal ist. Das absolute Minimum entspricht dem vom Drucksensor ermittelten Druckwert, wenn die Betriebsflüssigkeit aufgrund des im Betriebsflüssigkeitsbehälterinnenraum herrschenden Überdrucks erstmalig zurück in das Einfüllrohr gedrängt wird.

Das absolute Minimum ist besonders stark ausgeprägt, wenn das Einfüllrohr über ein Rückschlagventil mit dem Betriebsflüssigkeitsbehälterinnenraum fluidverbunden ist.

Das absolute Maximum, das auch als absoluter Maximaldruckwert bezeichnet werden kann, ist dabei so zu verstehen, dass dieses größer sein muss als die Druckwerte, die der Drucksensor als statisches Rauschen ausgibt. Das absolute Minimum, das auch als absoluter Minimaldruckwert bezeichnet werden kann, ist dabei so zu verstehen, dass dieses kleiner sein muss als die Druckwerte, die der Drucksensor als statisches Rauschen ausgibt.

Vorzugsweise beträgt die erste Zeitperiode 1 Sekunde. Weiter vorzugsweise beträgt die erste Zeitperiode 0,5 Sekunden. Weiter vorzugsweise beträgt die erste Zeitperiode 0,4 Sekunden. Weiter vorzugsweise beträgt die erste Zeitperiode 0,3 Sekunden. Weiter vorzugsweise beträgt die erste Zeitperiode 0,2 Sekunden. Weiter vorzugsweise beträgt die erste Zeitperiode 0,1 Sekunden. Weiter vorzugsweise beträgt die erste Zeitperiode weniger als 0,1 Sekunden.

Vorzugsweise werden die Druckwerte beginnend mit einem Befüllvorgang ermittelt und aufgezeichnet. Ein Beginn eines Befüllvorganges kann beispielsweise durch Öffnen einer Tankklappe und/oder durch einen Sensor im Einfüllrohr angezeigt werden, der ein Einführen einer Befülleinrichtung in das Einfüllrohr detektiert. Weiter vorzugsweise werden die Druckwerte nach Ablassen eines Überdrucks im Betriebsflüssigkeitsbehälter beginnend aufgezeichnet. Dies ist insbesondere bei PHEV-Fahrzeugen vorteilhaft.
Vorzugsweise ist das Verfahren derart ausgebildet, dass das Verfahren einen Verfahrensschritt zum Durchführen einer Hochpassfilterung der vom Drucksensor ermittelten Druckwerte aufweist, wobei der Verfahrensschritt des Ausgebens des Befüllstopp-Signals ausgeführt wird, wenn die hochpassgefilterten Druckwerte eine vorbestimmte Unterschwelle unterschreiten.

Durch eine Hochpassfilterung der Druckwerte werden die niederfrequenten Signalbestandteile der Druckwerte, die insbesondere durch den langsamen Druckanstieg aufgrund des steigenden Pegels im Einfüllrohr bedingt sind, herausgefiltert, so dass die schnelle Druckänderung, die durch die oszillierende Bewegung der Betriebsflüssigkeit im Einfüllrohr bedingt ist, einfacher identifizierbar ist.

Vorzugsweise werden durch die Hochpassfilterung lediglich Signale durchgelassen, die eine höhere Frequenz als 1 Hz aufweisen. Weiter Vorzugsweise werden durch die Hochpassfilterung lediglich Signale durchgelassen, die eine höhere Frequenz als 2 Hz aufweisen. Weiter Vorzugsweise werden durch die Hochpassfilterung lediglich Signale durchgelassen, die eine höhere Frequenz als 4 Hz aufweisen. Weiter Vorzugsweise werden durch die Hochpassfilterung lediglich Signale durchgelassen, die eine höhere Frequenz als 8 Hz aufweisen. Weiter Vorzugsweise werden durch die Hochpassfilterung lediglich Signale durchgelassen, die eine höhere Frequenz als 16 Hz aufweisen. Weiter Vorzugsweise werden durch die Hochpassfilterung lediglich Signale durchgelassen, die eine höhere Frequenz als 32 Hz aufweisen.

Vorzugsweise ist das Verfahren derart ausgebildet, dass das Verfahren einen Verfahrensschritt zum Durchführen einer Hochpassfilterung der vom Drucksensor ermittelten Druckwerte und einen anschließenden Verfahrensschritt zum Ermitteln der Absolutwerte der hochpassgefilterten Druckwerte aufweist, wobei der Verfahrensschritt zum Ausgeben des Befüllstopp-Signals ausgeführt wird, wenn die hochpassgefilterten und zu Absolutwerten umgewandelten Druckwerte eine vorbestimmte Oberschwelle überschreiten.

Das entsprechend ausgebildete Verfahrens hat den Vorteil, dass ein Oszillieren einer Betriebsflüssigkeit im Einfüllrohr und somit ein dieser oszillierenden Bewegung vorausgehender Befüllstopp einer Befülleinrichtung mit einer nochmals verbesserten Zuverlässigkeit bestimmt werden kann.

Vorzugsweise ist das Verfahren derart ausgebildet, dass das Verfahren einen Verfahrensschritt zum Durchführen einer Hochpassfilterung der vom Drucksensor ermittelten Druckwerte, einen anschließenden Verfahrensschritt zum Ermitteln der Absolutwerte der hochpassgefilterten Druckwerte und einen Verfahrensschritt zum Durchführen einer Tiefpassfilterung der zuerst hochpassgefilterten und dann zu Absolutwerten umgewandelten Druckwerte aufweist, wobei der Verfahrensschritt zum Ausgeben des Befüllstopp-Signals ausgeführt wird, wenn die zuerst hochpassgefilterten, dann zu Absolutwerten umgewandelten und anschließend tiefpassgefilterten Druckwerte eine vorbestimmte Oberschwelle überschreiten.

Das entsprechend ausgebildete Verfahrens hat den Vorteil, dass ein Oszillieren einer Betriebsflüssigkeit im Einfüllrohr und somit ein dieser oszillierenden Bewegung vorausgehender Befüllstopp einer Befülleinrichtung mit einer nochmals verbesserten Zuverlässigkeit bestimmt werden kann, da hochfrequente Anteile der so umgewandelten Signale (Druckwerte) weggefiltert werden.

Vorzugsweise werden durch die Tiefpassfilterung Signale herausgefiltert, die eine höhere Frequenz als 1 Hz aufweisen. Weiter vorzugsweise werden durch die Tiefpassfilterung Signale herausgefiltert, die eine höhere Frequenz als 2 Hz aufweisen. Weiter vorzugsweise werden durch die Tiefpassfilterung Signale herausgefiltert, die eine höhere Frequenz als 4 Hz aufweisen. Weiter vorzugsweise werden durch die Tiefpassfilterung Signale herausgefiltert, die eine höhere Frequenz als 8 Hz aufweisen. Weiter vorzugsweise werden durch die Tiefpassfilterung Signale herausgefiltert, die eine höhere Frequenz als 16 Hz aufweisen. Weiter vorzugsweise werden durch die Tiefpassfilterung Signale herausgefiltert, die eine höhere Frequenz als 32 Hz aufweisen.

Die der vorliegenden Erfindung zugrundeliegende Aufgabe wird ferner durch ein Betriebsflüssigkeitsbehältersystem mit einem Betriebsflüssigkeitsbehälter und einem in einen Betriebsflüssigkeitsbehälterinnenraum des Betriebsflüssigkeitsbehälters mündenden Einfüllrohr zum Befüllen des Betriebsflüssigkeitsbehälters mit einer Betriebsflüssigkeit gelöst, wobei das Betriebsflüssigkeitsbehältersystem dadurch gekennzeichnet ist, dass es zumindest einen innerhalb des Einfüllrohrs angeordneten Drucksensor aufweist, der über eine Datenleitung mit einer elektronischen Steuerungseinrichtung zum Übertragen von den Druck innerhalb des Einfüllrohrs repräsentierenden Daten an die elektronische Steuerungseinrichtung gekoppelt ist, wobei die Steuerungseinrichtung dazu ausgebildet ist, ein oben beschriebenes Verfahren zum Bestimmen eines Befüllstopps durchzuführen. Die Kopplung des Drucksensors mit der elektronischen Steuerungseinrichtung kann über eine drahtgebundene und/oder über eine drahtlose Datenleitung erfolgen.
Vorzugsweise ist der Drucksensor innerhalb des Einfüllrohrs derart eingebaut, dass der Drucksensor nicht über eine Innenfläche des Einfüllrohrs hinausragt.
Bei einer entsprechenden Ausbildung des Betriebsflüssigkeitsbehältersystems entstehen durch Bereitstellen des Drucksensors innerhalb des Einfüllrohrs keine durch den Drucksensor bedingten zusätzlichen Verwirbelungen. Zum einen ist dadurch die Messgenauigkeit des Drucks innerhalb des Einfüllrohrs erhöht, und zum anderen kann weiterhin ein erhöhter Befüllvolumenstrom durch das Einfüllrohr erreicht werden.

Weiter vorzugsweise ist der Drucksensor innerhalb des Einfüllrohrs derart eingebaut, dass der Drucksensor bündig mit der Innenfläche des Einfüllrohrs ist.
Die der vorliegenden Erfindung zugrundeliegende Aufgabe wird ferner durch ein Verfahren zum Detektieren eines Abschaltens einer Befülleinrichtung bei einem Befüllvorgang eines Betriebsflüssigkeitsbehälters gelöst, wobei ein Betriebsflüssigkeitsbehälterinnenraum des Betriebsflüssigkeitsbehälters über ein in diesen mündendes Einfüllrohr mit einer Betriebsflüssigkeit befüllbar ist, wobei das Betriebsflüssigkeitsbehältersystem einen an dem Betriebsflüssigkeitsbehälter oder am Einfüllrohr angebrachten Beschleunigungssensor aufweist. Das erfindungsgemäße Verfahren weist dabei einen Verfahrensschritt zum Ermitteln des zeitlichen Verlaufs von mittels des Beschleunigungssensors ermittelten Beschleunigungswerten und einen Verfahrensschritt zum Ausgeben eines Befüllstopp-Signals in Abhängigkeit des zeitlichen Verlaufs der Beschleunigungswerte auf.

Die mittels des Beschleunigungssensors ermittelten Beschleunigungswerte werden vorzugsweise derart gespeichert, dass einem jeden Zeitpunkt während eines Ermittlungszeitraumes/Aufzeichnungszeitraumes ein Beschleunigungswert zugeordnet ist. Folglich sind die Beschleunigungswerte vorzugsweise in einer Tabelle gespeichert. Eine Aufzeichnung bzw. Speicherung der Beschleunigungswerte wird vorzugsweise durch Ermitteln eines Befüllvorganges eingeleitet. Vorzugsweise wird ein Befüllvorgang durch einen Sensor im Einfüllrohr, vorzugsweise in einem Einfüllstutzen des Einfüllrohrs detektiert. Dieser kann beispielsweise ein Einführen eines Zapfventils oder einer anderen Befülleinrichtung in das Einfüllrohr detektieren.

Die Beschleunigungswerte werden vorzugsweise in regelmäßigen zeitlichen Abständen ermittelt und gespeichert.

Der Beschleunigungssensor kann auch als Körperschallsensor bezeichnet werden. Der Beschleunigungssensor ist vorzugsweise mit dem Einfüllrohr verbunden. Ferner ist es aufgrund der Verbindung des Einfüllrohrs mit dem Betriebsflüssigkeitsbehälter und der damit bedingten guten Übertragung von Körperschall von dem Einfüllrohr zum Betriebsflüssigkeitsbehälter möglich, dass der Beschleunigungssensor mit dem Betriebsflüssigkeitsbehälter verbunden ist.

Vorzugsweise ist das Verfahren derart ausgebildet, dass das Befüllstopp-Signal ausgegeben wird, wenn ein Beschleunigungswert einen vorbestimmten Beschleunigungsgrenzwert übersteigt.

Die der vorliegenden Erfindung zugrundeliegende Aufgabe wird ferner durch ein Betriebsflüssigkeitsbehältersystem mit einem Betriebsflüssigkeitsbehälter und einem in einen Betriebsflüssigkeitsbehälterinnenraum des Betriebsflüssigkeitsbehälters mündenden Einfüllrohr zum Befüllen des Betriebsflüssigkeitsbehälters mit einer Betriebsflüssigkeit gelöst, wobei das Betriebsflüssigkeitsbehältersystem dadurch gekennzeichnet ist, dass es einen Beschleunigungssensor aufweist, der an dem Betriebsflüssigkeitsbehälter oder an dem Einfüllrohr angebracht ist, wobei der Beschleunigungssensor über eine Datenleitung mit einer elektronischen Steuerungseinrichtung zum Übertragen von Beschleunigungsdaten an die elektronische Steuerungseinrichtung gekoppelt ist, und wobei die Steuerungseinrichtung dazu ausgebildet ist, ein Verfahren zum Bestimmen eines Befüllstopps nach einem der zwei zuletzt oben beschriebenen Verfahren durchzuführen.

Die Kopplung des Beschleunigungssensors mit der elektronischen Steuerungseinrichtung kann über eine drahtgebundene und/oder über eine drahtlose Datenleitung erfolgen.
Der Beschleunigungssensor kann auch als Körperschallsensor bezeichnet werden. Der Beschleunigungssensor ist vorzugsweise mit dem Einfüllrohr verbunden. Ferner ist es aufgrund der Verbindung des Einfüllrohrs mit dem Betriebsflüssigkeitsbehälter und der damit bedingten guten Übertragung von Körperschall von dem Einfüllrohr zum Betriebsflüssigkeitsbehälter möglich, dass der Beschleunigungssensor mit dem Betriebsflüssigkeitsbehälter verbunden ist.
Die der vorliegenden Erfindung zugrundeliegende Aufgabe wird ferner durch ein Verfahren zum Detektieren eines Abschaltens einer Befülleinrichtung bei einem Befüllvorgang eines Betriebsflüssigkeitsbehälters gelöst, wobei ein Betriebsflüssigkeitsbehälterinnenraum des Betriebsflüssigkeitsbehälters über ein in diesen mündendes Einfüllrohr mit einer Betriebsflüssigkeit befüllbar ist, wobei in dem Einfüllrohr ein Volumenstromsensor zur Bestimmung eines Volumenstroms innerhalb des Einfüllrohrs angeordnet ist. Das erfindungsgemäße Verfahren weist dabei einen Verfahrensschritt zum Ermitteln des zeitlichen Verlaufs von mittels des Volumenstromsensors ermittelten Volumenstromwerten und einen Verfahrensschritt zum Ausgeben eines Befüllstopp-Signals in Abhängigkeit des zeitlichen Verlaufs der Volumenstromwerte auf.

Die mittels des Volumenstromsensors ermittelten Volumenstromwerte werden vorzugsweise derart gespeichert, dass einem jeden Zeitpunkt während eines Ermittlungszeitraumes/Aufzeichnungszeitraumes ein Volumenstromwert zugeordnet ist. Folglich sind die Volumenstromwerte vorzugsweise in einer Tabelle gespeichert. Eine Aufzeichnung bzw. Speicherung der Volumenstromwerte wird vorzugsweise durch Ermitteln eines Befüllvorganges eingeleitet. Vorzugsweise wird ein Befüllvorgang durch einen Sensor im Einfüllrohr, vorzugsweise in einem Einfüllstutzen des Einfüllrohrs detektiert. Dieser kann beispielsweise ein Einführen eines Zapfventils oder einer anderen Befülleinrichtung in das Einfüllrohr detektieren.

Die Volumenstromwerte werden vorzugsweise in regelmäßigen zeitlichen Abständen ermittelt und gespeichert.

Vorzugsweise ist das Verfahren derart ausgebildet, dass das Befüllstopp-Signal ausgegeben wird, wenn ein Volumenstromwert einen vorbestimmten Volumenstromgrenzwert unterschreitet.

Die der vorliegenden Erfindung zugrundeliegende Aufgabe wird ferner durch ein Betriebsflüssigkeitsbehältersystem mit einem Betriebsflüssigkeitsbehälter und einem in einen Betriebsflüssigkeitsbehälterinnenraum des Betriebsflüssigkeitsbehälters mündenden Einfüllrohr zum Befüllen des Betriebsflüssigkeitsbehälters mit einer Betriebsflüssigkeit gelöst, wobei das Betriebsflüssigkeitsbehältersystem dadurch gekennzeichnet ist, dass es einen innerhalb des Einfüllrohrs angeordneten Volumenstromsensor aufweist, der über eine Datenleitung mit einer elektronischen Steuerungseinrichtung zum Übertragen von den Volumenstrom innerhalb des Einfüllrohrs repräsentierenden Daten an die elektronische Steuerungseinrichtung gekoppelt ist, und wobei die Steuerungseinrichtung dazu ausgebildet ist, ein Verfahren zum Bestimmen eines Befüllstopps nach einem der zwei zuletzt oben beschriebenen Verfahren durchzuführen.

Die Kopplung des Volumenstromsensors mit der elektronischen Steuerungseinrichtung kann über eine drahtgebundene und/oder über eine drahtlose Datenleitung erfolgen.

Vorzugsweise ist das Betriebsflüssigkeitsbehältersystem derart ausgebildet, dass dieses ein Rückschlagventil aufweist, über das der Betriebsflüssigkeitsbehälterinnenraum mit dem Einfüllrohr (20) fluidverbunden ist.

Das Rückschlagventil ist vorzugsweise als Klappe zwischen dem in den Betriebsflüssigkeitsbehälterinnenraum mündenden Ende des Einfüllrohrs und dem Betriebsflüssigkeitsbehälterinnenraum angeordnet.

Durch Bereitstellung des Rückschlagventils wird bei Beenden eines Befüllvorganges der im Einfüllrohr erzeugte Unterdruck aufgrund der oszillierendes Bewegung der Betriebsflüssigkeit im Einfüllrohr verstärkt, so dass ein Befüllstopp der Befülleinrichtung nochmals zuverlässiger bestimmt werden kann.

Wenn das Betriebsflüssigkeitsbehältersystem einen Drucksensor innerhalb des Einfüllrohrs aufweist, dann ist der Drucksensor vorzugsweise flussaufwärts des Rückschlagventils angeordnet. Flussaufwärts bezieht sich dabei auf die Flussrichtung der über das Einfüllrohr in den Betriebsflüssigkeitsbehälterinnenraum eingefüllte Betriebsflüssigkeit.

Weitere Vorteile, Einzelheiten und Merkmale der Erfindung ergeben sich nachfolgend aus den erläuterten Ausführungsbeispielen. Dabei zeigen im Einzelnen:
- Figur 1:: eine schematische Darstellung eines erfindungsgemäßen Betriebsflüssigkeitsbehältersystems;
- Figur 2:: eine Darstellung von mittels des in Figur 1 dargestellten Drucksensors ermittelten Druckwerten innerhalb eines Einfüllrohrs des Betriebsflüssigkeitsbehältersystems während eines Befüllvorganges des Betriebsflüssigkeitsbehälters;
- Figuren 3 bis 6:: Flussablaufdiagramme von Verfahren zum Bestimmen eines Befüllstopps gemäß unterschiedlichen Ausführungsformen der vorliegenden Erfindung;
- Figur 7A:: eine Darstellung des zeitlichen Verlaufs von mittels des in Figur 1 dargestellten Drucksensors ermittelten Druckwerten innerhalb eins Einfüllrohrs des Betriebsflüssigkeitsbehältersystems während eines Befüllvorganges des Betriebsflüssigkeitsbehälters;
- Figur 7B:: eine Darstellung des zeitlichen Verlaufs der in Figur 7A dargestellten Druckwerte, nachdem diese von einem Hochpassfilter gefiltert wurden;
- Figur 7C:: eine Darstellung des zeitlichen Verlaufs der Absolutwerte der in Figur 7B dargestellten Drucksignale;
- Figur 7D:: eine Darstellung des zeitlichen Verlaufs der in Figur 7C dargestellten Drucksignale, nachdem diese von einem Tiefpassfilter gefiltert wurden;
- Figur 8 bis 11:: Flussablaufdiagramme von Verfahren zum Bestimmen eines Befüllstopps gemäß unterschiedlichen Ausführungsformen der vorliegenden Erfindung;
- Figur 12:: eine schematische Darstellung eines Betriebsflüssigkeitsbehältersystems gemäß einer weiteren Ausführungsform der vorliegenden Erfindung;
- Figur 13:: ein Flussablaufdiagramm eines Verfahrens zum Bestimmen eines Befüllstopps bei dem in Figur 12 gezeigten Betriebsflüssigkeitsbehältersystem;
- Figur 14:: eine schematische Darstellung eines Betriebsflüssigkeitsbehältersystems gemäß einer weiteren Ausführungsform der vorliegenden Erfindung;
- Figur 15:: ein Flussablaufdiagramm eines Verfahrens zum Bestimmen eines Befüllstopps bei dem in Figur 14 gezeigten Betriebsflüssigkeitsbehältersystem;
- Figur 16:: eine Darstellung des zeitlichen Verlaufs des Drucks im Betriebsflüssigkeitsbehälter (jeweils untere Druckverläufe) und des Drucks im Einfüllrohr (jeweils obere Druckverläufe);
- Figur 17:: Darstellungen von zeitlichen Druckverläufen, wobei in dem oberen Diagramm mit durchgezogener Linie der Druckverlauf im Einfüllrohr und mit gestrichelter Linie der Druckverlauf im Behälter dargestellt ist, wobei im mittleren Diagramm der hydrostatische Druck im Einfüllrohr dargestellt, und wobei im unteren Diagramm der zeitliche Druckverlauf im Einfüllrohr kompensiert um den hydrostatischen Anteil dargestellt ist;
- Figur 18:: Darstellungen von zeitlichen Druckverläufen im Einfüllrohr für unterschiedliche Befüllvolumenströme; und
- Figur 19:: Druckwerte im Einfüllrohr und im Betriebsflüssigkeitsbehälter in Abhängigkeit von Befüllvolumenströmen.

In der nun folgenden Beschreibung bezeichnen gleiche Bezugszeichen gleiche Bauteile bzw. gleiche Merkmale, sodass eine in Bezug auf eine Figur durchgeführte Beschreibung bezüglich eines Bauteils auch für die anderen Figuren gilt, sodass eine wiederholende Beschreibung vermieden wird. Ferner sind einzelne Merkmale, die in Zusammenhang mit einer Ausführungsform beschrieben wurden, auch separat in anderen Ausführungsformen verwendbar.

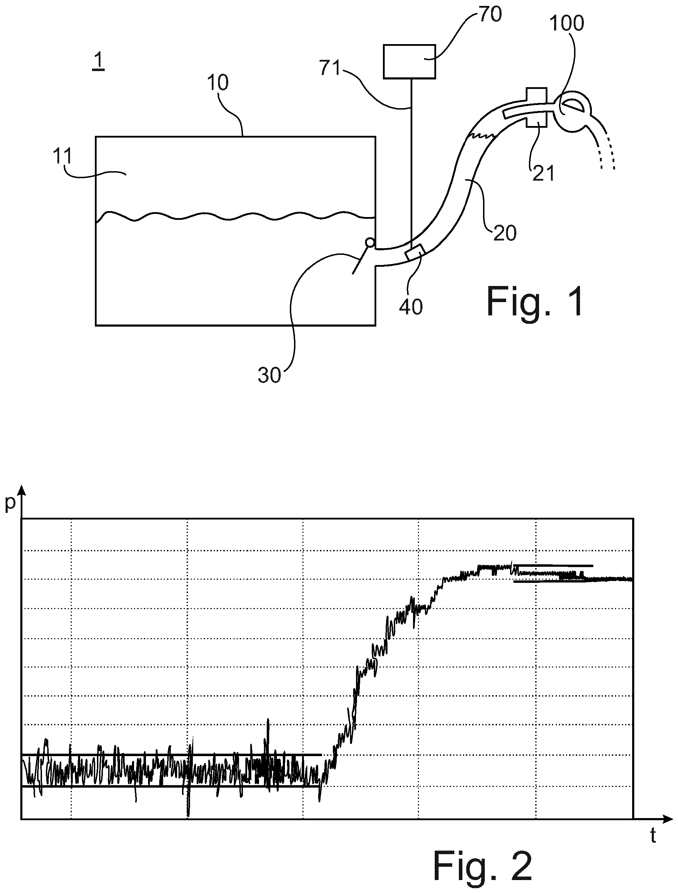

Figur 1 zeigt eine schematische Darstellung eines erfindungsgemäßen Betriebsflüssigkeitsbehältersystems 1, das im vorliegenden Fall als Kraftstoffbehältersystem 1 ausgebildet ist. Das Betriebsflüssigkeitsbehältersystem 1 weist einen Betriebsflüssigkeitsbehälter 10 und ein in einen Betriebsflüssigkeitsbehälterinnenraum 11 des Betriebsflüssigkeitsbehälters 10 mündendes Einfüllrohr 20 zum Befüllen des Betriebsflüssigkeitsbehälterinnenraums 10 mit einer Betriebsflüssigkeit auf. Aus Figur 1 ist ferner ersichtlich, dass das Betriebsflüssigkeitsbehältersystem 1 ferner einen innerhalb des Einfüllrohrs 20 angeordneten Drucksensor 40 aufweist. Es ist ersichtlich, dass der Drucksensor in einem Mündungsbereich, in dem das Einfüllrohr 20 in den Betriebsflüssigkeitsbehälterinnenraum 11 mündet, angeordnet ist. Dabei ist der Drucksensor 40 in Einbaulage des Betriebsflüssigkeitsbehältersystems 1 an einer unteren Wandung des Einfüllrohrs 20 angeordnet.

Obschon so aus Figur 1 nicht ersichtlich, ist der Drucksensor 40 innerhalb des Einfüllrohrs 20 vorzugsweise derart eingebaut, dass der Drucksensor 40 nicht über eine Innenfläche des Einfüllrohrs 20 hinausragt. Bei einer entsprechenden Ausbildung des Betriebsflüssigkeitsbehältersystems 1 entstehen durch Bereitstellen des Drucksensors 40 innerhalb des Einfüllrohrs 20 keine durch den Drucksensor 40 bedingten zusätzlichen Verwirbelungen. Zum einen ist dadurch die Messgenauigkeit des Drucksensors 40 innerhalb des Einfüllrohrs 40 erhöht, und zum anderen kann weiterhin ein erhöhter Befüllvolumenstrom durch das Einfüllrohr 20 erreicht werden.

Der Betriebsflüssigkeitsbehälterinnenraum 11 ist über eine Befülleinrichtung 100, die im dargestellten Ausführungsbeispiel als Zapfventil 100 ausgebildet ist, mit einer Betriebsflüssigkeit befüllbar. Das Zapfventil 100 ist zu diesem Zweck über einen Einfüllstutzen 21 des Einfüllrohrs 20 in dieses eingeführt.

Im Mündungsbereich des Einfüllrohrs 20 in den Betriebsflüssigkeitsbehälterinnenraum 11 ist ein Rückschlagventil 30 angeordnet, das im vorliegenden Fall als Rückschlagklappe 30 ausgebildet ist. Das Rückschlagventil 30, das auch als Inlet-Check-Valve 30 bezeichnet wird, unterbindet oder verringert zumindest ein Zurückfließen von Betriebsflüssigkeit aus dem Betriebsflüssigkeitsbehälterinnenraum 11 in das Einfüllrohr 20.

Aus Figur 1 ist ferner ersichtlich, dass der Drucksensor 40 über eine Datenleitung 71 mit einer elektronischen Steuerungseinrichtung 70 zum Übertragen von den Druck innerhalb des Einfüllrohrs 20 repräsentierenden Daten an die elektronische Steuerungseinrichtung 70 gekoppelt ist. Die Datenleitung 71 kann als drahtgebundene oder als drahtlose Datenleitung 71 ausgebildet sein.

Die Steuerungseinrichtung 70 ist dazu ausgebildet, eines der unten beschriebenen Verfahren zum Bestimmen eines Befüllstopps durchzuführen.

Figur 2 zeigt eine Darstellung von mittels des in Figur 1 dargestellten Drucksensors 40 ermittelten Druckwerten innerhalb des Einfüllrohrs 20 des Betriebsflüssigkeitsbehältersystems 1 während eines Befüllvorganges des Betriebsflüssigkeitsbehälters 10. Es ist ersichtlich, dass in einer ersten Zeitperiode der Druck innerhalb des Einfüllrohrs 20 im Wesentlichen konstant ist, jedoch einen großen Rauschpegel aufweist. Während der ersten Zeitperiode ist der Betriebsflüssigkeitsbehälterinnenraum 11 über ein in den Figuren nicht dargestelltes Entlüftungsventil mit der Atmosphäre zum Ableiten von aus dem Betriebsflüssigkeitsbehälterinnenraum verdrängten Gase fluidverbunden. Während der ersten Zeitperiode ergibt sich der Druck im Einfüllrohr 20 aus einem statischen Druckanteil, der durch die Betriebsflüssigkeitssäule im Einfüllrohr 20 und den Atmosphärendruck bedingt ist, und einem dynamischen Druckanteil, der durch die Fließbewegung der Betriebsflüssigkeit im Einfüllrohr 20 bedingt ist.

Nachdem ein Abschaltfüllstand im Betriebsflüssigkeitsbehälterinnenraum 11 erreicht ist, schließt das Entlüftungsventil, so dass der Betriebsflüssigkeitsbehälterinnenraum 11 von der Atmosphäre fluidgetrennt ist. Folglich steigt durch weiteres Einleiten von Betriebsflüssigkeit der Druck innerhalb des Betriebsflüssigkeitsbehälterinnenraums 11 an, wodurch ein Pegel der Betriebsflüssigkeit im Einfüllrohr 20 ansteigt. Dies ist aus Figur 2 an den steigende Druckwerte ersichtlich. Wenn die Betriebsflüssigkeit das Zapfventil 100 erreicht, führt das Zapfventil einen Befüllstopp aus. Infolge dessen fließt während einer zweiten Zeitperiode keine Betriebsflüssigkeit oder erheblich weniger Betriebsflüssigkeit von dem Einfüllrohr 20 in den Betriebsflüssigkeitsbehälterinnenraum 11, so dass der vom Drucksensor 40 bestimmte Druck während der zweiten Zeitperiode aufgrund des Fehlens des dynamischen Druckanteils einen erheblich kleineren Rauschpegel aufweist. Dies ist an dem in Figur 2 dargestellten Druckverlauf im rechten Bereich von Figur 2 ersichtlich. Es ist ersichtlich, dass der Rauschpegel während der ersten Zeitperiode größer ist als während der zweiten Zeitperiode.

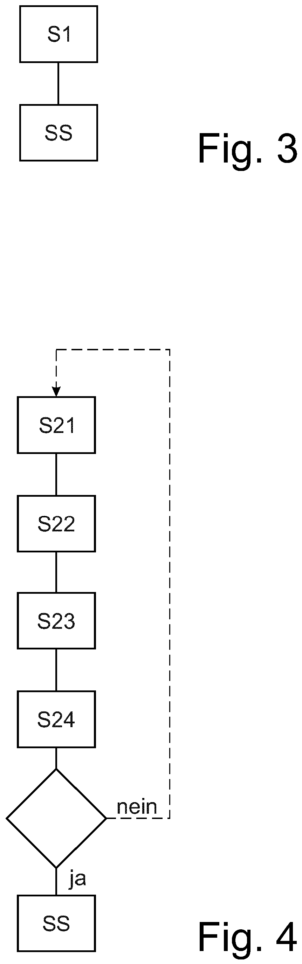

Figur 3 zeigt ein Verfahrensablaufplan, den die elektronische Steuerungseinrichtung 70 ausführt. In einem ersten Verfahrensschritt S1 wird der zeitliche Verlauf von mittels des Drucksensors 40 ermittelten Druckwerten aufgezeichnet. Anschließend gibt die Steuerungseinrichtung 70 in Abhängigkeit des zeitlichen Verlaufs der Druckwerte ein Befüllstopp-Signal SS aus.

Gemäß einer Ausführungsform der vorliegenden Erfindung ist die Steuerungseinrichtung 70 dazu ausgebildet, das in Figur 4 dargestellt Verfahren auszuführen. In einem Verfahrensschritt S21 werden zumindest zwei Druckwerten innerhalb einer ersten Zeitperiode innerhalb des Einfüllrohrs 20 mittels des Drucksensors 40 ermittelt. Die erste Zeitperiode ist dabei die Zeitperiode in Figur 2, bei der die Druckwerte sich aus der Überlagerung des statischen Drucks und des dynamischen Drucks innerhalb des Einfüllrohrs 20 ergibt. Anschließend wird ein Verfahrensschritt S22 zum Ermitteln von zumindest zwei weiteren Druckwerten innerhalb einer der ersten Zeitperiode zeitlich nachfolgenden zweiten Zeitperiode innerhalb des Einfüllrohrs 20 mittels des Drucksensors 40 ausgeführt. Die zweite Zeitperiode ist dabei die Zeitperiode in Figur 2, bei der die Druckwerte sich lediglich aus statischen Druck innerhalb des Einfüllrohrs 20 ergibt, folglich keine Betriebsflüssigkeit von dem Einfüllrohr 20 in den Betriebsflüssigkeitsbehälterinnenraum 11 fließt. Anschließend wird ein Verfahrensschritt S23 zum Bestimmen einer ersten Differenz zwischen den innerhalb der ersten Zeitperiode ermittelten Druckwerten und ein Verfahrensschritt S24 zum Bestimmen einer zweiten Differenz zwischen den innerhalb der zweiten Zeitperiode ermittelten Druckwerten ausgeführt. In einem weiteren Verfahrensschritt werden die Absolutwerte der ersten Differenz und der zweiten Differenz miteinander verglichen, und wenn der Absolutwert der zweiten Differenz kleiner ist als der Absolutwert der ersten Differenz wird der Verfahrensschritt SS zum Ausgeben des Befüllstopp-Signals ausgegeben. Alternativ wird, wenn der Absolutwert der zweiten Differenz nicht kleiner als der Absolutwert der ersten Differenz ist, zurück zu Verfahrensschritt S21 gesprungen.

Die Steuerungseinrichtung 70 ist vorzugsweise dazu ausgebildet, dass innerhalb der ersten Zeitperiode und innerhalb der zweiten Zeitperiode mehr als jeweils zwei Druckwerte ermittelt werden. In diesem Fall weist das Verfahren dann folgende Verfahrensschritte auf:
- Ermitteln S21 einer Vielzahl von Druckwerten innerhalb einer ersten Zeitperiode innerhalb des Einfüllrohrs 20 mittels des Drucksensors 40;
- Ermitteln S22 einer Vielzahl weiteren Druckwerten innerhalb einer der ersten Zeitperiode zeitlich nachfolgenden zweiten Zeitperiode innerhalb des Einfüllrohrs 20 mittels des Drucksensors 40;
- Bestimmen S23 einer ersten Differenz zwischen dem größten innerhalb der ersten Zeitperiode ermittelten Druckwert und dem kleinsten innerhalb der ersten Zeitperiode ermittelten Druckwert;
- Bestimmen S23 einer zweiten Differenz zwischen dem größten innerhalb der zweiten Zeitperiode ermittelten Druckwert und dem kleinsten innerhalb der zweiten Zeitperiode ermittelten Druckwert; und
- Ausgeben SS eines Befüllstopp-Signals, wenn der Absolutwert der zweiten Differenz kleiner ist als der Absolutwert der ersten Differenz.

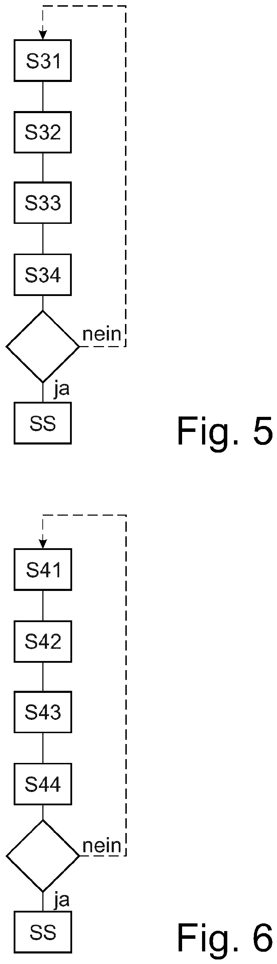

Gemäß einer weiteren Ausführungsform der vorliegenden Erfindung ist die Steuerungseinrichtung 70 dazu ausgebildet, das in Figur 5 dargestellt Verfahren auszuführen. In einem Verfahrensschritt S31 wird eine Vielzahl von ersten Druckwerten innerhalb der ersten Zeitperiode ermittelt. Anschließend wird in einem Verfahrensschritt S32 ein erstes Signal-Rausch-Verhältnis basierend auf der Vielzahl der ersten Druckwerte ermittelt. Das Verfahren weist ferner einen Verfahrensschritt S33 zum Ermitteln einer Vielzahl von zweiten Druckwerten innerhalb der der ersten Zeitperiode zeitlich nachfolgenden zweiten Zeitperiode und einen zeitlich nachfolgenden Verfahrensschritt S34 zum Bestimmen eines zweiten Signal-Rausch-Verhältnisses basierend auf der Vielzahl der zweiten Druckwerte auf. In einem weiteren Verfahrensschritt werden das erste Signal-Rausch-Verhältnis und das zweite Signal-Rausch-Verhältnis miteinander verglichen, und wenn das zweite Signal-Rausch-Verhältnis größer als das erste Signal-Rausch-Verhältnis ist, wird der Verfahrensschritt SS zum Ausgeben des Befüllstopp-Signals ausgeführt. Alternativ wird, wenn das zweite Signal-Rausch-Verhältnis nicht größer oder gleich dem ersten Signal-Rausch-Verhältnis ist, zurück zu Verfahrensschritt S31 gesprungen.

Gemäß einer weiteren Ausführungsform der vorliegenden Erfindung ist die Steuerungseinrichtung 70 dazu ausgebildet, das in Figur 6 dargestellt Verfahren auszuführen. In einem Verfahrensschritt S41 wird eine Vielzahl von ersten Druckwerten innerhalb einer ersten Zeitperiode ermittelt. Anschließend wird in einem Verfahrensschritt S42 ein erstes Frequenzspektrum basierend auf den ersten Druckwerten ermittelt bzw. berechnet. Vorzugsweise wird das erste Frequenzspektrum durch eine Fourier-Transformation der ersten Druckwerte erzeugt. Das Verfahren weist ferner einen Verfahrensschritt S43 zum Ermitteln einer Vielzahl von zweiten Druckwerten innerhalb einer der ersten Zeitperiode zeitlich nachfolgenden zweiten Zeitperiode auf. Anschließend wird in einem Verfahrensschritt S44 ein zweites Frequenzspektrum basierend auf den zweiten Druckwerten ermittelt bzw. berechnet. Vorzugsweise wird das zweite Frequenzspektrum durch eine Fourier-Transformation der zweiten Druckwerte erzeugt. In einem weiteren Verfahrensschritt werden das erste Frequenzspektrum und das zweite Frequenzspektrum miteinander verglichen, und wenn sich das zweite Frequenzspektrum von dem ersten Frequenzspektrum unterscheidet, wird der Verfahrensschritt SS zum Ausgeben des Befüllstopp-Signals ausgeführt. Alternativ wird, wenn sich das zweite Frequenzspektrum nicht von dem ersten Frequenzspektrum unterscheidet, zurück zu Verfahrensschritt S41 gesprungen.

Durch Bestimmung der Frequenzspektren während der ersten Zeitperiode und während der zweiten Zeitperiode und durch Vergleich bestimmter Frequenzbereiche, die für den dynamischen Druck charakteristisch sind, lassen sich Rückschlüsse ziehen, ob Betriebsflüssigkeit durch das Einfüllrohr 20 fließt. Wenn beispielsweise für eine Fließbewegung von Betriebsflüssigkeit innerhalb des Einfüllrohrs 20 charakteristische Frequenzen im Frequenzspektrum nicht vorhanden sind, dann gibt die Befülleinrichtung 100 keine Betriebsflüssigkeit mehr aus, so dass dann das Befüllstopp-Signal ausgegeben wird. Das Frequenzspektrum in der ersten Zeitperiode weist höhere Frequenzen auf als das Frequenzspektrum in der zweiten Zeitperiode.

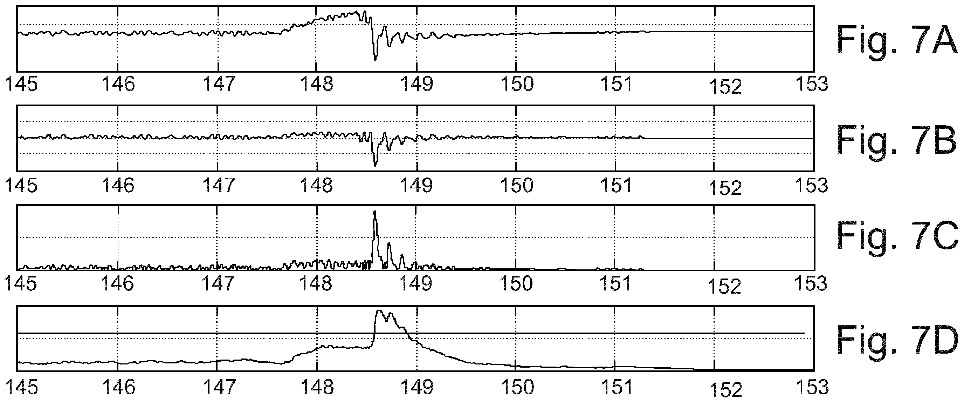

Figur 7A zeigt eine Darstellung des zeitlichen Verlaufs von mittels des in Figur 1 dargestellten Drucksensors 40 ermittelten Druckwerten innerhalb des Einfüllrohrs 20 des Betriebsflüssigkeitsbehältersystems 1 während eines Befüllvorganges des Betriebsflüssigkeitsbehälters 10. Es ist ersichtlich, dass im Zeitbereich zwischen 147 Sekunden und 149 Sekunden der Druck innerhalb des Einfüllrohrs 20 zuerst ansteigt, um dann bei ca. 148,5 Sekunden stark abzufallen.

Wenn die Befülleinrichtung 100 das Ausgeben von Betriebsflüssigkeit beendet, dann geht diesem Beenden ein Schließen eines den Betriebsflüssigkeitsbehälterinnenraum 11 mit der Atmosphäre fluidverbindendes und in den Figuren nichtdargestellten Entlüftungsventils vor, so dass der Betriebsflüssigkeitsbehälterinnenraum 11 nicht mehr entlüftet werden kann. Folglich steigt aufgrund des ansteigenden Drucks im Betriebsflüssigkeitsbehälterinnenraum 11 eine Betriebsflüssigkeitssäule im Einfüllrohr 20 an, bis ein Abschaltmechanismus der Befülleinrichtung 100 bzw. Einfülleinrichtung 100 betätigt wird. Der Pegel der Betriebsflüssigkeitssäule im Einfüllrohr 20 ist beim Abschalten der Einfülleinrichtung 100 bzw. des Zapfventils 100 höher als der Pegel der Betriebsflüssigkeit im Betriebsflüssigkeitsbehälter 10. Daher fließt Betriebsflüssigkeit trotz verschlossenem Entlüftungsventil weiter aus dem Einfüllrohr 20 in den Betriebsflüssigkeitsbehälterinnenraum 11, wobei der Druck im Betriebsflüssigkeitsbehälterinnenraum 11 weiter ansteigt. Das unter Druck stehende Gas innerhalb des Betriebsflüssigkeitsbehälterinnenraums 11 wirkt wie eine Feder und treibt die Betriebsflüssigkeit aus dem Betriebsflüssigkeitsbehälterinnenraum 11 zurück in das Einfüllrohr 20. Dies führt zu einer gedämpften oszillierenden Bewegung der Betriebsflüssigkeit zwischen dem Betriebsflüssigkeitsbehälterinnenraum 11 und dem Einfüllrohr 20, die wiederum zu Druckschwankungen und zu einem Druckabfall innerhalb des Einfüllrohrs 20 führt.

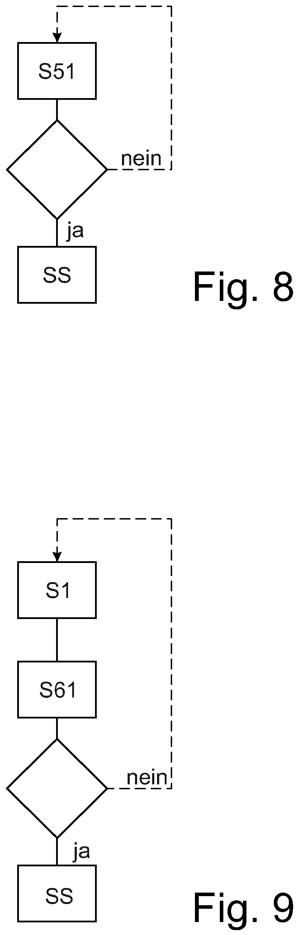

Gemäß einer weiteren Ausführungsform der vorliegenden Erfindung ist die Steuerungseinrichtung 70 dazu ausgebildet, das in Figur 8 dargestellt Verfahren auszuführen. In einem Verfahrensschritt S51 wird bestimmt, ob die vom Drucksensor 40 ermittelten Druckwerte im Einfüllrohr 20 ein absolutes Maximum und ein diesem in einem ersten zeitlichen Abstand folgendes absolutes Minimum aufweisen. Anschließend wird der Verfahrensschritt SS zum Ausgeben des Befüllstopp-Signals ausgeführt, wenn der erste zeitliche Abstand kürzer als eine vorbestimmte Zeitperiode ist. Bei der Auslegung des Betriebsflüssigkeitsbehältersystems 1 sind die Abmessungen und die Geometrien des Betriebsflüssigkeitsbehälters 10, des Einfüllrohrs 20 und des Rückschlagventils 30 derart, dass der absolute Minimaldruck in etwa 0,1 Sekunden nach dem absoluten Maximaldruckwert folgt. Folglich ist bei einer entsprechenden Auslegung des Betriebsflüssigkeitsbehältersystems 1 die vorbestimmte Zeitperiode vorzugsweise zwischen 0,05 Sekunden und 0,2 Sekunden. Die vorbestimmte Zeitperiode kann je nach Abmessung und Geometrien des Betriebsflüssigkeitsbehälters 10, des Einfüllrohrs 20 und des Rückschlagventils 30 entsprechend anders gewählt werden.

Das absolute Maximum entspricht dabei dem vom Drucksensor 20 ermittelten Druck direkt bei der Abschaltung der Befülleinrichtung 100, da zu diesem Zeitpunkt der Pegel der Betriebsflüssigkeit im Einfüllrohr 20 maximal ist. Das absolute Minimum entspricht dem vom Drucksensor 20 ermittelten Druckwert, wenn die Betriebsflüssigkeit aufgrund des im Betriebsflüssigkeitsbehälterinnenraum 11 herrschenden Überdrucks erstmalig zurück in das Einfüllrohr 20 gedrängt wird. Das absolute Minimum ist besonders stark ausgeprägt, wenn das Einfüllrohr 20 über ein Rückschlagventil 30 mit dem Betriebsflüssigkeitsbehälterinnenraum 11 fluidverbunden ist.

Das absolute Maximum, das auch als absoluter Maximaldruckwert bezeichnet werden kann, ist dabei so zu verstehen, dass dieses größer sein muss als die Druckwerte, die der Drucksensor 20 als statisches Rauschen ausgibt. Das absolute Minimum, das auch als absoluter Minimaldruckwert bezeichnet werden kann, ist dabei so zu verstehen, dass dieses kleiner sein muss als die Druckwerte, die der Drucksensor 20 als statisches Rauschen ausgibt.

Figur 7B zeigt eine Darstellung des zeitlichen Verlaufs der in Figur 7A dargestellten Druckwerte, nachdem diese von einem Hochpassfilter gefiltert wurden.

Gemäß einer weiteren Ausführungsform der vorliegenden Erfindung ist die Steuerungseinrichtung 70 dazu ausgebildet, das in Figur 9 dargestellt Verfahren auszuführen. Im Verfahrensschritt S1 wird der zeitliche Verlauf von mittels des Drucksensors 40 ermittelten Druckwerten aufgezeichnet. In einem Verfahrensschritt S61 werden die vom Drucksensor 20 ermittelten Druckwerte einer Hochpassfilterung unterzogen. Anschließend wird mittels der Steuerungseinrichtung 70 überprüft, ob die gefilterten Druckwerte eine vorbestimmte Unterschwelle unterschreiten. Wenn die hochpassgefilterten Druckwerte die vorbestimmte Unterschwelle unterschreiten, wird der Verfahrensschritt SS zum Ausgeben des Befüllstopp-Signals ausgeführt. Wenn die hochpassgefilterten Druckwerte die vorbestimmte Unterschwelle nicht unterschreiten, kann alternativ zurück zu Verfahrensschritt S1 gesprungen werden.

Figur 7C zeigt eine Darstellung des zeitlichen Verlaufs der Absolutwerte der in Figur 7B dargestellten Drucksignale.

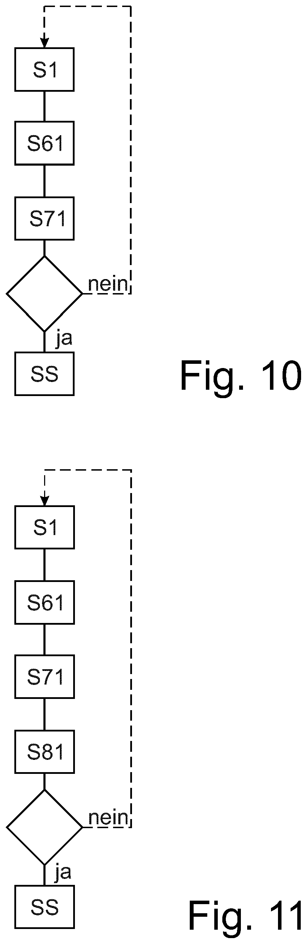

Gemäß einer weiteren Ausführungsform der vorliegenden Erfindung ist die Steuerungseinrichtung 70 dazu ausgebildet, das in Figur 10 dargestellte Verfahren auszuführen. Im Verfahrensschritt S1 wird der zeitliche Verlauf von mittels des Drucksensors 40 ermittelten Druckwerten aufgezeichnet. In einem Verfahrensschritt S61 werden die vom Drucksensor 20 ermittelten Druckwerte einer Hochpassfilterung unterzogen. Anschließend werden in einem Verfahrensschritt S71 die Absolutwerte der hochpassgefilterten Druckwerte/Drucksignale ermittelt/erzeugt. Anschließend wird mittels der Steuerungseinrichtung 70 überprüft, ob die hochpassgefilterten und zu Absolutwerten umgewandelten Druckwerte eine vorbestimmte Oberschwelle überschreiten. Wenn die hochpassgefilterten und zu Absolutwerten umgewandelten Druckwerte die vorbestimmte Oberschwelle überschreiten, wird der Verfahrensschritt SS zum Ausgeben des Befüllstopp-Signals ausgeführt. Wenn die hochpassgefilterten und zu Absolutwerten umgewandelten Druckwerte die vorbestimmte Oberschwelle nicht überschreiten, kann alternativ zurück zu Verfahrensschritt S1 gesprungen werden. Figur 7D zeigt eine Darstellung des zeitlichen Verlaufs der in Figur 7C dargestellten Drucksignale, nachdem diese von einem Tiefpassfilter gefiltert wurden.

Gemäß einer weiteren Ausführungsform der vorliegenden Erfindung ist die Steuerungseinrichtung 70 dazu ausgebildet, das in Figur 11 dargestellte Verfahren auszuführen. Im Verfahrensschritt S1 wird der zeitliche Verlauf von mittels des Drucksensors 40 ermittelten Druckwerten aufgezeichnet. In einem Verfahrensschritt S61 werden die vom Drucksensor 20 ermittelten Druckwerte einer Hochpassfilterung unterzogen. Anschließend werden in einem Verfahrensschritt S71 die Absolutwerte der hochpassgefilterten Druckwerte/Drucksignale ermittelt/erzeugt. In einem Verfahrensschritt S81 werden die hochpassgefilterten und dann zu Absolutwerten umgewandelten Druckwerte/Drucksignale einer Tiefpassfilterung unterzogen. Anschließend wird mittels der Steuerungseinrichtung 70 überprüft, ob die die zuerst hochpassgefilterten, dann zu Absolutwerten umgewandelten und anschließend tiefpassgefilterten Druckwerte/Drucksignale eine vorbestimmte Oberschwelle überschreiten. Wenn die hochpassgefilterten, zu Absolutwerten umgewandelten und anschließend tiefpassgefilterten Druckwerte/Drucksignale Druckwerte die vorbestimmte Oberschwelle überschreiten, wird der Verfahrensschritt SS zum Ausgeben des Befüllstopp-Signals ausgeführt. Wenn die hochpassgefilterten, zu Absolutwerten umgewandelte und anschließend tiefpassgefilterten Druckwerte/Drucksignale die vorbestimmte Oberschwelle nicht überschreiten, kann alternativ zurück zu Verfahrensschritt S1 gesprungen werden.

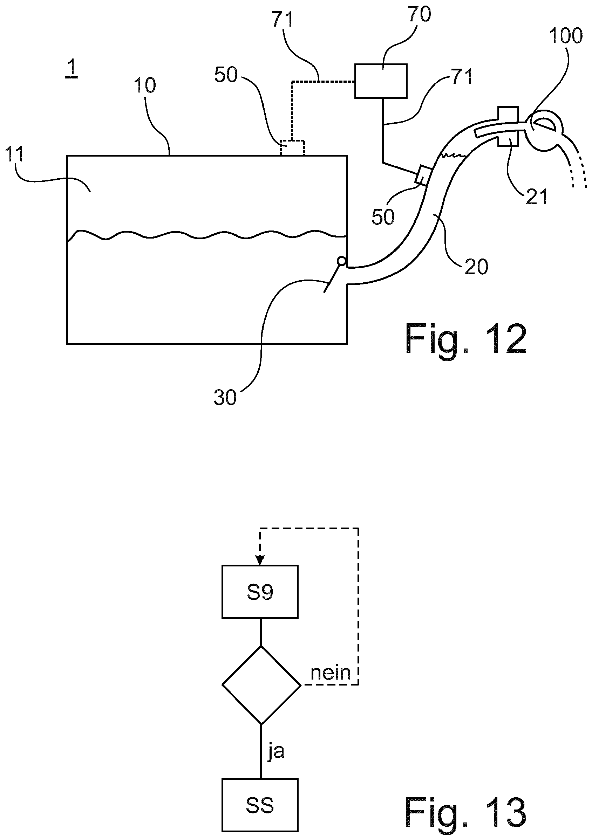

Figur 12 zeigt eine schematische Darstellung eines Betriebsflüssigkeitsbehältersystems 1 gemäß einer weiteren Ausführungsform der vorliegenden Erfindung. Das in Figur 12 dargestellte Betriebsflüssigkeitsbehältersystem 1 unterscheidet sich von dem in Figur 1 dargestellten Betriebsflüssigkeitsbehältersystem 1 dadurch, dass dieses zumindest einen Beschleunigungssensor 50 aufweist, der an dem Einfüllrohr 20 oder an dem Betriebsflüssigkeitsbehälter 10 angeordnet sein kann. Das Betriebsflüssigkeitsbehältersystem 1 kann auch zwei Beschleunigungssensoren 50 aufweisen, wobei ein erster Beschleunigungssensor 50 an dem Einfüllrohr 20 und ein zweiter Beschleunigungssensor 50 an dem Betriebsflüssigkeitsbehälter 10 angeordnet ist. Der Beschleunigungssensor 50 ist über eine drahtgebundene oder drahtlose Datenleitung 71 mit der Steuerungseinrichtung 70 zum Übertragen von Daten gekoppelt. Ferner ist es auch möglich, dass das in Figur 12 dargestellte Betriebsflüssigkeitsbehältersystem 1 den in Figur 1 dargestellten Drucksensor 40 aufweist.

Die Steuerungseinrichtung 70 ist dazu ausgebildet, Das in Figur 13 dargestellte Verfahren auszuführen. In einem Verfahrensschritt S9 wird der zeitliche Verlauf von mittels des Beschleunigungssensors 50 ermittelten Beschleunigungswerten ermittelt. Anschließend überprüft die Steuerungseinrichtung 70, ob ein Beschleunigungswert einen vorbestimmten Beschleunigungsgrenzwert übersteigt. Wenn ein Beschleunigungswert den Beschleunigungsgrenzwert übersteigt, wird der Verfahrensschritt SS zu Ausgeben des Befüllstopp-Signals ausgeführt. Folglich wird das Befüllstopp-Signal in Abhängigkeit des zeitlichen Verlaufs des von dem Beschleunigungssensor 50 ermittelten Beschleunigungswerte ausgegeben.

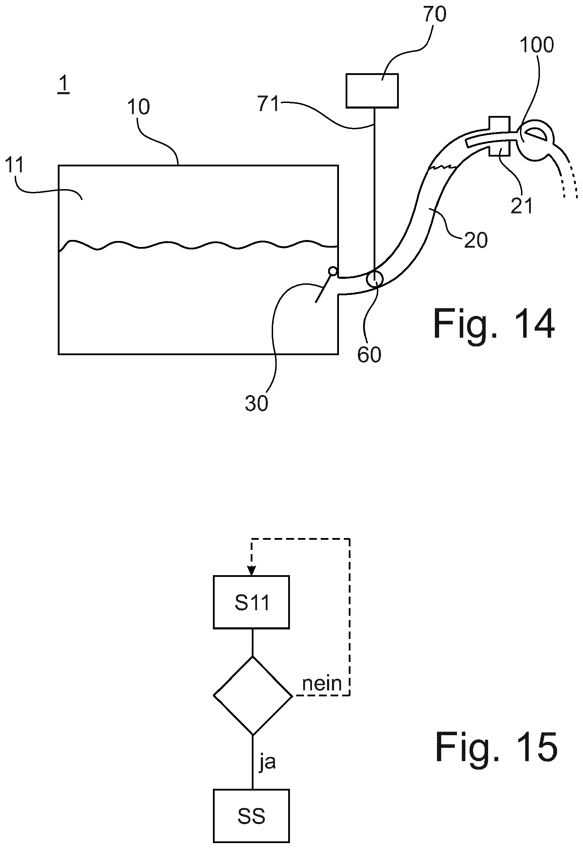

Figur 14 zeigt eine schematische Darstellung eines Betriebsflüssigkeitsbehältersystems 1 gemäß einer weiteren Ausführungsform der vorliegenden Erfindung. Das in Figur 14 dargestellte Betriebsflüssigkeitsbehältersystem 1 unterscheidet sich von dem in Figur 1 dargestellten Betriebsflüssigkeitsbehältersystem 1 dadurch, dass dieses zumindest einen im Einfüllrohr 20 angeordnet Volumenstromsensor 60 zum Bestimmen von Volumenstrommesswerten der Betriebsflüssigkeit durch das Einfüllrohr 20 aufweist. Der Volumenstromsensor 60 ist über eine drahtgebundene oder drahtlose Datenleitung 71 mit der Steuerungseinrichtung 70 zum Übertragen von Daten gekoppelt. Ferner ist es auch möglich, dass das in Figur 14 dargestellte Betriebsflüssigkeitsbehältersystem 1 den in Figur 1 dargestellten Drucksensor 40 und/oder den in Figur 12 dargestellten Beschleunigungssensor 50 aufweist.

Die Steuerungseinrichtung 70 ist dazu ausgebildet, Das in Figur 15 dargestellte Verfahren auszuführen. In einem Verfahrensschritt S11 wird der zeitliche Verlauf von mittels des Volumenstromsensors 60 ermittelten Volumenstromwerten ermittelt. Anschließend überprüft die Steuerungseinrichtung 70, ob ein Volumenstromwert einen vorbestimmten Volumenstromgrenzwert unterschreitet. Wenn ein Volumenstromwert den Volumenstromgrenzwert unterschreitet, wird der Verfahrensschritt SS zu Ausgeben des Befüllstopp-Signals ausgeführt. Folglich wird das Befüllstopp-Signal in Abhängigkeit des zeitlichen Verlaufs des von dem Volumenstromsensor 60 ermittelten Volumenstromwerten ausgegeben.

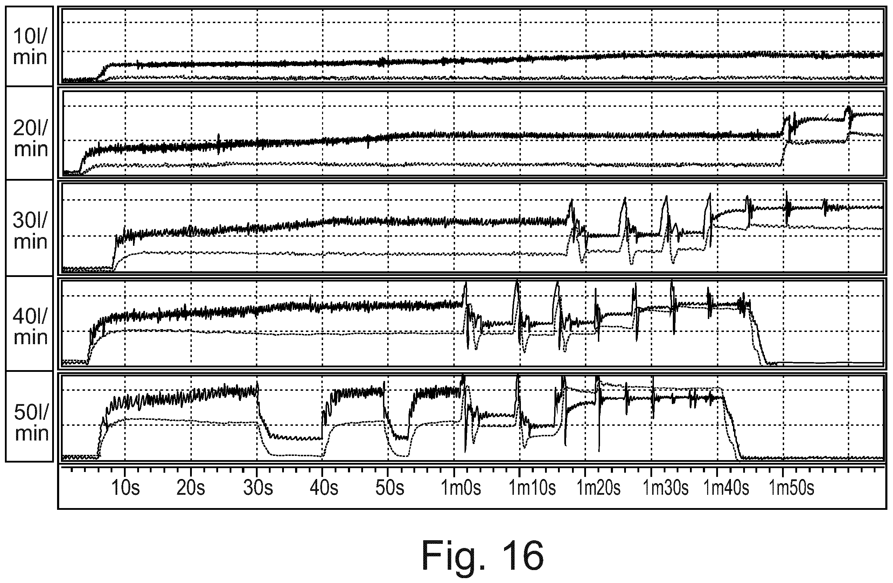

Mit Bezug auf die Figuren 16 bis 19 wird nachfolgend ein Ver- fahren zum Erzielen eines Zielvolumens bzw. zum Bereitstellen einer definierten Nachfüllmenge beschrieben. Die Bestimmung des Volumenstroms bzw. des Befüllvolumenstroms soll über den im Einfüllrohr 20 angeordneten Drucksensor 40 erfolgen.

In Figur 16 ist der Verlauf des Drucks im Betriebsflüssigkeitsbehälter 10 und des Drucks im Einfüllrohr 20 bei verschiedenen Füllraten (10 l/min bis 50 l/min) dargestellt.
Hierbei ist zu erkennen, dass sich der Druckverlauf grundsätzlich unterscheidet. Insbesondere ist bei der Druckmessung im Einfüllrohr 20 ein Einfluss des Kraftstofffüllstands auf den Druck zu bemerken. Da der Drucksensor im Einfüllrohr fluidisch mit dem Tank/Betriebsflüssigkeitsbehälter verbunden ist, misst dieser zusätzlich den hydrostatischen Druck des Kraftstoffs / der Betriebsflüssigkeit im Tank. Dies ist durch einen mit dem Füllstand steigenden Druck im Einfüllrohr 20 zu erkennen. Sobald der Kraftstoffstand in der Hauptkammer (es handelt sich um einen Satteltank) nicht weiter steigt, da der gesamte Kraftstofffluss in die Nebenkammer geht, findet auch kein weiterer Druckanstieg mehr statt.

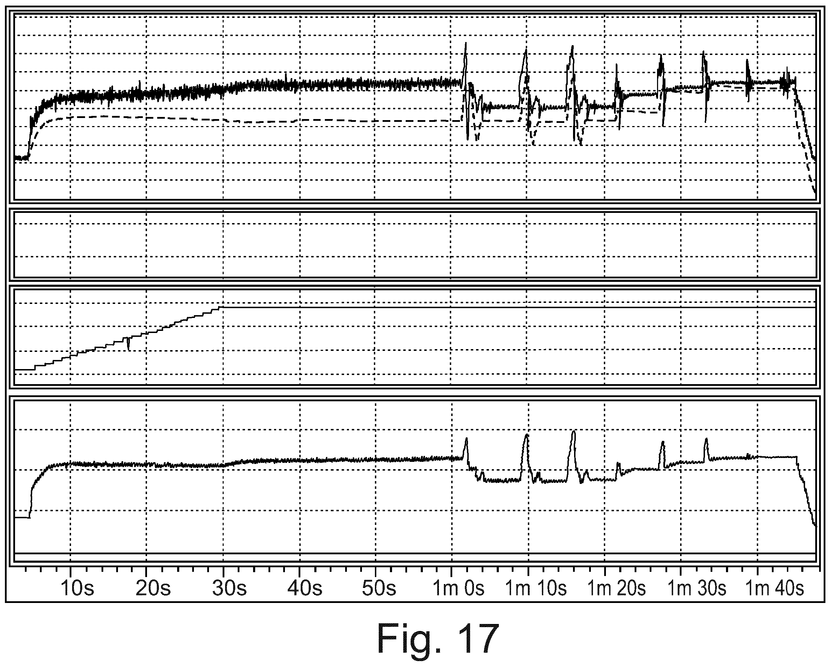

In Figur 17 ist daher der Druckverlauf kompensiert um den hydrostatischen Anteil dargestellt. Der Füllstand der Hauptkammer wird über *p_{hydrostatisch}* = *ρgh* in einen hydrostatischen Druck (Signal *hydrostatischerDruck*) umgerechnet. Aus der Differenz des Drucks im Einfüllrohr 20 und des hydrostatischen Drucks ergibt sich dann der kompensierte Druckverlauf (Signal *TankDruckBereinigt*).

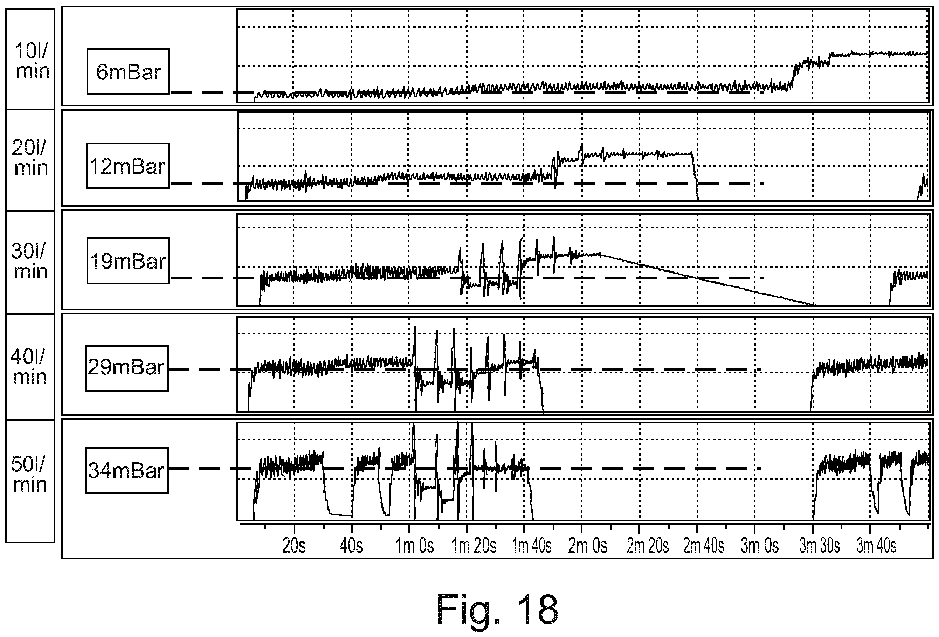

Somit lässt sich ein über den Betankungsvorgang relativ konstantes Druckniveau ermitteln. Dieses Druckniveau ändert sich mit dem Volumenstrom, wie Figur 18 zeigt.

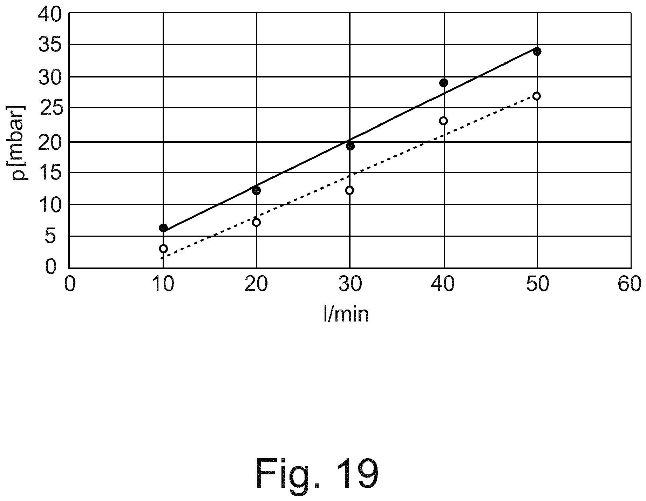

Figur 19 zeigt die über den Volumenstrom aufgetragenen Druckwerte, sowohl vom kompensierten Drucksignal im Einfüllrohr 20 als auch von einer Druckmessung im Tank. Daraus lässt sich ein recht linearer Zusammenhang zwischen Druck und Einfüllrohr 20 herleiten, der eine Bestimmung des Volumenstroms auf Basis eines ermittelten Drucks im Einfüllrohr 20 einfach ermöglicht.

Mit Hilfe einer Druckmessung lässt sich einfach ein Rückschluss auf den Volumenstrom ziehen. Der sich ergebene Zusammenhang ist linear. Bei einer Druckmessung im Tank 10 kann dieser Rückschluss ohne weitere Kenntnis von Parametern erfolgen. Wird der Druck im Einfüllrohr 20 gemessen, muss dabei zusätzlich der hydrostatische Anteil des Kraftstoffs im Tank 10 berücksichtigt werden.

### Bezugszeichenliste

- 1: Betriebsflüssigkeitsbehältersystem
- 10: Betriebsflüssigkeitsbehälter
- 11: Betriebsflüssigkeitsbehälterinnenraum
- 20: Einfüllrohr
- 21: Einfüllstutzen
- 30: Rückschlagventil / Inlet-Check-Valve
- 40: Drucksensor
- 50: Beschleunigungssensor / Körperschallsensor
- 60: Volumenstromsensor
- 70: elektronische Steuerungseinrichtung
- 71: Datenleitung
- 100: Befülleinrichtung / Zapfventil

## Patentansprüche

1. Verfahren zum Detektieren eines Abschaltens einer Befülleinrichtung bei einem Befüllvorgang eines Betriebsflüssigkeitsbehälters (10), dessen Betriebsflüssigkeitsbehälterinnenraum (11) über ein in diesen mündendes Einfüllrohr (20) mit einer Betriebsflüssigkeit befüllbar ist, wobei in dem Einfüllrohr (20) ein Drucksensor (40) zur Bestimmung eines Drucks innerhalb des Einfüllrohrs (20) angeordnet ist, wobei das Verfahren folgende Verfahrensschritte aufweist:
- Ermitteln (S1) des zeitlichen Verlaufs von mittels des Drucksensors (40) ermittelten Druckwerten; und
- Ausgeben (SS) eines Befüllstopp-Signals in Abhängigkeit des zeitlichen Verlaufs der Druckwerte.

2. Verfahren nach Anspruch 1, **gekennzeichnet durch** die folgenden Merkmale:
- Ermitteln (S21) von zumindest zwei Druckwerten innerhalb einer ersten Zeitperiode innerhalb des Einfüllrohrs (20) mittels des Drucksensors (40);
- Ermitteln (S22) von zumindest zwei weiteren Druckwerten innerhalb einer der ersten Zeitperiode zeitlich nachfolgenden zweiten Zeitperiode innerhalb des Einfüllrohrs (20) mittels des Drucksensors (40);
- Bestimmen (S23) einer ersten Differenz zwischen den innerhalb der ersten Zeitperiode ermittelten Druckwerten;
- Bestimmen (S24) einer zweiten Differenz zwischen den innerhalb der zweiten Zeitperiode ermittelten Druckwerten; und
- Ausgeben (SS) eines Befüllstopp-Signals, wenn der Absolutwert der zweiten Differenz kleiner ist als der Absolutwert der ersten Differenz.

3. Verfahren nach einem der vorhergehenden Ansprüche, **gekennzeichnet durch** die folgenden Merkmale:
- Ermitteln (S31) einer Vielzahl von ersten Druckwerten innerhalb einer ersten Zeitperiode;
- Bestimmen (S32) eines ersten Signal-Rausch-Verhältnisses basierend auf der Vielzahl der ersten Druckwerte;
- Ermitteln (S33) einer Vielzahl von zweiten Druckwerten innerhalb einer der ersten Zeitperiode zeitlich nachfolgenden zweiten Zeitperiode;
- Bestimmen (S34) eines zweiten Signal-Rausch-Verhältnisses basierend auf der Vielzahl der zweiten Druckwerte; und
- Ausgeben (SS) eines Befüllstopp-Signals, wenn das zweite Signal-Rausch-Verhältnis größer ist als das erste Signal-Rausch-Verhältnis.

4. Verfahren nach einem der vorhergehenden Ansprüche, **gekennzeichnet durch** die folgenden Merkmale:
- Ermitteln (S41) einer Vielzahl von ersten Druckwerten innerhalb einer ersten Zeitperiode;
- Ermitteln (S42) eines ersten Frequenzspektrums basierend auf den ersten Druckwerten;
- Ermitteln (S43) einer Vielzahl von zweiten Druckwerten innerhalb einer der ersten Zeitperiode zeitlich nachfolgenden zweiten Zeitperiode;
- Ermitteln (S44) eines zweiten Frequenzspektrums basierend auf den zweiten Druckwerten; und
- Ausgeben (SS) eines Befüllstopp-Signals wenn das zweite Frequenzspektrum sich von dem ersten Frequenzspektrum unterscheidet.

5. Verfahren nach einem der vorhergehenden Ansprüche, **gekennzeichnet durch** die folgenden Verfahrensschritte:
- Ermitteln (S51), ob die Druckwerte ein absolutes Maximum und ein diesem in einem ersten zeitlichen Abstand folgendes absolutes Minimum aufweisen; und
- Ausgeben (SS) des Befüllstopp-Signals, wenn der erste zeitliche Abstand kürzer als eine vorbestimmte Zeitperiode ist.

6. Verfahren nach einem der vorhergehenden Ansprüche, **gekennzeichnet durch** die folgenden Verfahrensschritte:
- Durchführen (S61) einer Hochpassfilterung der vom Drucksensor (40) ermittelten Druckwerte; und
- Ausgeben (SS) des Befüllstopp-Signals, wenn die hochpassgefilterten Druckwerte eine vorbestimmte Unterschwelle unterschreiten.

7. Verfahren nach einem der vorhergehenden Ansprüche, **gekennzeichnet durch** die folgenden Verfahrensschritte:
- Durchführen (S61) einer Hochpassfilterung der vom Drucksensor (40) ermittelten Druckwerte;
- Ermitteln (S71) der Absolutwerte der hochpassgefilterten Druckwerte; und
- Ausgeben (SS) des Befüllstopp-Signals, wenn die hochpassgefilterten und zu Absolutwerten umgewandelten Druckwerte eine vorbestimmte Oberschwelle überschreiten.

8. Verfahren nach einem der vorhergehenden Ansprüche, **gekennzeichnet durch** die folgenden Verfahrensschritte:
- Durchführen (S61) einer Hochpassfilterung der vom Drucksensor (40) ermittelten Druckwerte;
- Ermitteln (S71) der Absolutwerte der hochpassgefilterten Druckwerte; und
- Durchführen (S81) einer Tiefpassfilterung der zuerst hochpassgefilterten und dann zu Absolutwerten umgewandelten Druckwerte; und
- Ausgeben (SS) des Befüllstopp-Signals, wenn die zuerst hochpassgefilterten, dann zu Absolutwerten umgewandelten und anschließend tiefpassgefilterten Druckwerte eine vorbestimmte Oberschwelle überschreiten.

9. Verfahren zum Detektieren eines Abschaltens einer Befülleinrichtung bei einem Befüllvorgang eines Betriebsflüssigkeitsbehälters (10), dessen Betriebsflüssigkeitsbehälterinnenraum (11) über ein in diesen mündendes Einfüllrohr (20) mit einer Betriebsflüssigkeit befüllbar ist, wobei das Betriebsflüssigkeitsbehältersystem einen an dem Betriebsflüssigkeitsbehälter (10) oder am Einfüllrohr (20) angebrachten Beschleunigungssensor (50) aufweist, wobei das Verfahren folgende Verfahrensschritte aufweist:
- Ermitteln (S9) des zeitlichen Verlaufs von mittels des Beschleunigungssensors (50) ermittelten Beschleunigungswerten; und
- Ausgeben (SS) eines Befüllstopp-Signals in Abhängigkeit des zeitlichen Verlaufs der Beschleunigungswerte.

10. Verfahren nach Anspruch 9, **dadurch gekennzeichnet, dass** das Befüllstopp-Signal ausgegeben wird, wenn ein Beschleunigungswert einen vorbestimmten Beschleunigungsgrenzwert übersteigt.

11. Verfahren zum Detektieren eines Abschaltens einer Befülleinrichtung bei einem Befüllvorgang eines Betriebsflüssigkeitsbehälters (10), dessen Betriebsflüssigkeitsbehälterinnenraum (11) über ein in diesen mündendes Einfüllrohr (20) mit einer Betriebsflüssigkeit befüllbar ist, wobei in dem Einfüllrohr (20) ein Volumenstromsensor (60) zur Bestimmung eines Volumenstroms innerhalb des Einfüllrohrs (20) angeordnet ist, wobei das Verfahren folgende Verfahrensschritte aufweist:
- Ermitteln (S11) des zeitlichen Verlaufs von mittels des Volumenstromsensors (60) ermittelten Volumenstromwerten; und
- Ausgeben (SS) eines Befüllstopp-Signals in Abhängigkeit des zeitlichen Verlaufs der Volumenstromwerte.

12. Verfahren nach Anspruch 11, **dadurch gekennzeichnet, dass** das Befüllstopp-Signal ausgegeben wird, wenn ein Volumenstromwert einen vorbestimmten Volumenstromgrenzwert unterschreitet.

13. Betriebsflüssigkeitsbehältersystem (1) mit
- einem Betriebsflüssigkeitsbehälter (10),
- einem in einen Betriebsflüssigkeitsbehälterinnenraum (11) mündenden Einfüllrohr (20) zum Befüllen des Betriebsflüssigkeitsbehälters (10) mit einer Betriebsflüssigkeit,
**gekennzeichnet durch** die folgenden Merkmale:
- das Betriebsflüssigkeitsbehältersystem (1) weist einen innerhalb des Einfüllrohrs (20) angeordneten Drucksensor (40) auf;
- der Drucksensor (40) ist über eine Datenleitung mit einer elektronischen Steuerungseinrichtung (70) zum Übertragen von den Druck innerhalb des Einfüllrohrs (20) repräsentierenden Daten an die elektronische Steuerungseinrichtung (70) gekoppelt; und
- die Steuerungseinrichtung (70) ist dazu ausgebildet, ein Verfahren zum Detektieren eines Abschaltens einer Befülleinrichtung nach einem der Ansprüche 1 bis 8 durchzuführen.

14. Betriebsflüssigkeitsbehältersystem nach Anspruch 13, **dadurch gekennzeichnet, dass** der Drucksensor (40) innerhalb des Einfüllrohrs (20) derart eingebaut ist, dass der Drucksensor (40) nicht über eine Innenfläche des Einfüllrohrs (20) hinausragt.

15. Betriebsflüssigkeitsbehältersystem (1) mit
- einem Betriebsflüssigkeitsbehälter (10),
- einem in einen Betriebsflüssigkeitsbehälterinnenraum (11) mündenden Einfüllrohr (20) zum Befüllen des Betriebsflüssigkeitsbehälters (10) mit einer Betriebsflüssigkeit,
**gekennzeichnet durch** die folgenden Merkmale:
- das Betriebsflüssigkeitsbehältersystem (1) weist einen Beschleunigungssensor auf, der an dem Betriebsflüssigkeitsbehälter (10) oder an dem Einfüllrohr (20) angebracht ist;
- der Beschleunigungssensor ist über eine Datenleitung mit einer elektronischen Steuerungseinrichtung (70) zum Übertragen von Beschleunigungsdaten an die elektronische Steuerungseinrichtung (70) gekoppelt; und
- die Steuerungseinrichtung (70) ist dazu ausgebildet, ein Verfahren zum Detektieren eines Abschaltens einer Befülleinrichtung nach einem der Ansprüche 9 bis 10 durchzuführen.

16. Betriebsflüssigkeitsbehältersystem (1) mit
- einem Betriebsflüssigkeitsbehälter (10),
- einem in einen Betriebsflüssigkeitsbehälterinnenraum (11) mündenden Einfüllrohr (20) zum Befüllen des Betriebsflüssigkeitsbehälters (10) mit einer Betriebsflüssigkeit,
**gekennzeichnet durch** die folgenden Merkmale:
- das Betriebsflüssigkeitsbehältersystem (1) weist einen innerhalb des Einfüllrohrs (20) angeordneten Volumenstromsensor (60) auf;
- der Volumenstromsensor (60) ist über eine Datenleitung mit einer elektronischen Steuerungseinrichtung (70) zum Übertragen von den Volumenstrom innerhalb des Einfüllrohrs (20) repräsentierenden Daten an die elektronische Steuerungseinrichtung (70) gekoppelt; und
- die Steuerungseinrichtung (70) ist dazu ausgebildet, ein Verfahren zum Detektieren eines Abschaltens einer Befülleinrichtung nach einem der Ansprüche 11 bis 12 durchzuführen.

17. Betriebsflüssigkeitsbehältersystem nach einem der Ansprüche 13 bis 16, **dadurch gekennzeichnet, dass** das Betriebsflüssigkeitsbehältersystem ein Rückschlagventil (30) aufweist, über das der Betriebsflüssigkeitsbehälterinnenraum (11) mit dem Einfüllrohr (20) fluidverbunden ist.

## Claims

1. Method for detecting a deactivation of a filling device during a filling process of an operating fluid container (10) whose operating fluid container interior (11) can be filled with an operating fluid via a filling pipe (20) opening into said interior (11), wherein a pressure sensor (40) for determining a pressure within the filling pipe (20) is arranged in the filling pipe (20), wherein the method has the following method steps:
- acquiring (S1) the time profile of pressure values acquired by means of the pressure sensor (40); and
- outputting (SS) a filling stop signal in accordance with the time profile of the pressure values.

2. Method according to Claim 1, **characterized by** the following features:
- acquiring (S21) at least two pressure values within a first time period within the filing pipe (20) by means of the pressure sensor (40);
- acquiring (S22) at least two further pressure values within a second time period, which chronologically follows the first time period, within the filing pipe (20) by means of the pressure sensor (40);
- determining (S23) a first difference between the pressure values acquired within the first time period;
- determining (S24) a second difference between the pressure values acquired within the second time period; and
- outputting (SS) a filling stop signal if the absolute value of the second difference is lower than the absolute value of the first difference.

3. Method according to one of the preceding claims, **characterized by** the following features:
- acquiring (S31) a multiplicity of first pressure values within a first time period;
- determining (S32) a first signal-to-noise ratio on the basis of the multiplicity of first pressure values;
- acquiring (S33) a multiplicity of second pressure values within a second time period which chronologically follows the first time period;
- determining (S34) a second signal-to-noise ratio on the basis of the multiplicity of second pressure values; and
- outputting (SS) a filling stop signal if the second signal-to-noise ratio is larger than the first signal-to-noise ratio.

4. Method according to one of the preceding claims, **characterized by** the following features:
- acquiring (S41) a multiplicity of first pressure values within a first time period;
- acquiring (S42) a first frequency spectrum on the basis of the first pressure values;
- acquiring (S43) a multiplicity of second pressure values within a second time period which chronologically follows the first time period;
- acquiring (S44) a second frequency spectrum on the basis of the second pressure values; and
- outputting (SS) a filling stop signal if the second frequency spectrum differs from the first frequency spectrum.

5. Method according to one of the preceding claims, **characterized by** the following method steps:
- ascertaining (S51) whether the pressure values have an absolute maximum and an absolute minimum following the latter at a first time interval; and
- outputting (SS) the filling stop signal if the first time interval is shorter than a predetermined time period.

6. Method according to one of the preceding claims, **characterized by** the following method steps:
- carrying out (S61) high-pass filtering of the pressure values acquired by the pressure senor (40); and
- outputting (SS) the filling stop signal if the high-pass-filtered pressure values undershoot a predetermined lower threshold.

7. Method according to one of the preceding claims, **characterized by** the following method steps:
- carrying out (S61) high-pass filtering of the pressure values acquired by the pressure sensor (40);
- acquiring (S71) the absolute values of the high-pass-filtered pressure values; and
- outputting (SS) the filling stop signal if the high-pass-filtered pressure values which have been converted into absolute values exceed a predetermined upper threshold.

8. Method according to one of the preceding claims, **characterized by** the following method steps:
- carrying out (S61) high-pass filtering of the pressure values acquired by the pressure sensor (40);
- acquiring (S71) the absolute values of the high-pass-filtered pressure values; and
- carrying out (S81) low-pass filtering of the pressure values which were firstly high-pass filtered and then converted into absolute values; and
- outputting (SS) the filling stop signal if the pressure values which were firstly high-pass filtered and then converted into absolute values and subsequently low-pass filtered exceed a predetermined upper threshold.

9. Method for detecting a deactivation of a filling device during a filling process of an operating fluid container (10) whose operating fluid container interior (11) can be filled via a filling pipe (20), opening into said interior (11) with an operating fluid, wherein the operating fluid container system has an acceleration sensor (50) which is mounted on the operating fluid container (10) or on the filling pipe (20), wherein the method has the following method steps:
- acquiring (S9) the time profile of acceleration values acquired by means of the acceleration sensor (50); and
- outputting (SS) a filling stop signal in accordance with the time profile of the acceleration values.

10. Method according to Claim 9, **characterized in that** the filling stop signal is output if an acceleration value exceeds a predetermined acceleration limiting value.

11. Method for detecting a deactivation of a filling device during a filling process of an operating fluid container (10) whose operating fluid container interior (11) can be filled via a filling pipe (20), opening into said interior (11), with an operating fluid, wherein a volume flow sensor (60) for determining a volume flow within the filling pipe (20) is arranged in the filling pipe (20), wherein the method has the following method steps:
- acquiring (S11) the time profile of volume flow values acquired by means of the volume flow sensor (60); and
- outputting (SS) a filling stop signal in accordance with the time profile of the volume flow values.

12. Method according to Claim 11, **characterized in that** the filling stop signal is output if a volume flow value undershoots a predetermined volume flow limiting value.

13. Operating fluid container system (1) having
- an operating fluid container (10),
- a filling pipe (20), opening into an operating fluid container interior (11), for filling the operating fluid container (10) with an operating fluid,
**characterized by** the following features:
- the operating fluid container system (1) has a pressure sensor (40) arranged within the filling pipe (20);
- the pressure sensor (40) is coupled via a data line to an electronic control device (70) for transmitting data, representing the pressure within the filling pipe (20), to the electronic control device (70); and
- the control device (70) is designed to carry out a method for detecting a deactivation of a filling device according to one of Claims 1 to 8.

14. Operating fluid container system according to Claim 13, **characterized in that** the pressure sensor (40) is installed within the filling pipe (20) in such a way that the pressure sensor (40) does not project beyond an inner face of the filling pipe (20).

15. Operating fluid container system (1) having
- an operating fluid container (10),
- a filling pipe (20), opening into an operating fluid container interior (11), for filling the operating fluid container (10) with an operating fluid,
**characterized by** the following features:
- the operating fluid container system (1) has an acceleration sensor which is mounted on the operating fluid container (10) or on the filling pipe (20);
- the acceleration sensor is coupled via a data line to an electronic control device (70) for transmitting acceleration data to the electronic control device (70); and
- the control device (70) is designed to carry out a method for detecting a deactivation of a filling device according to one of Claims 9 to 10.

16. Operating fluid container system (1) having
- an operating fluid container (10),
- a filling pipe (20), opening into an operating fluid container interior (11), for filling the operating fluid container (10) with an operating fluid,
**characterized by** the following features:
- the operating fluid container system (1) has a volume flow sensor (60) arranged within the filling pipe (20);
- the volume flow sensor (60) is coupled via a data line to an electronic control device (70) for transmitting data, representing the volume flow within the filling pipe (20), to the electronic control device (70); and
- the control device (70) is designed to carry out a method for detecting a deactivation of a filling device according to one of Claims 11 to 12.

17. Operating fluid container system according to one of Claims 13 to 16, **characterized in that** the operating fluid container system has a non-return value (30) via which the operating fluid container interior (11) is fluidically connected to the filling pipe (20).

## Revendications

1. Procédé de détection d'arrêt d'un dispositif de remplissage lors d'une opération de remplissage d'un réservoir de liquide de fonctionnement (10), dont l'espace intérieur de réservoir de liquide de fonctionnement (11) peut être rempli d'un liquide de fonctionnement par l'intermédiaire d'un tube de remplissage (20) débouchant dans celui-ci, un capteur de pression (40) permettant de déterminer une pression à l'intérieur du tube de remplissage (20) étant disposé dans le tube de remplissage (20), le procédé comprenant les étapes de procédé suivantes :
- détermination (S1) de la variation dans le temps des valeurs de pression déterminées par le capteur de pression (40) ; et
- émission (SS) d'un signal d'interruption de remplissage en fonction de la variation dans le temps des valeurs de pression.

2. Procédé selon la revendication 1, **caractérisé par** les caractéristiques suivantes :
- détermination (S21) d'au moins deux valeurs de pression durant une première période de temps à l'intérieur du tube de remplissage (20) par le capteur de pression (40) ;
- détermination (S22) d'au moins deux autres valeurs de pression durant une seconde période de temps suivant chronologiquement la première période de temps à l'intérieur du tube de remplissage (20) par le capteur de pression (40) ;
- détermination (S23) d'une première différence entre les valeurs de pression déterminées durant la première période de temps ;
- détermination (S24) d'une seconde différence entre les valeurs de pression déterminées durant la seconde période de temps ; et
- émission (SS) d'un signal d'interruption de remplissage lorsque la valeur absolue de la seconde différence est inférieure à la valeur absolue de la première différence.

3. Procédé selon l'une des revendications précédentes, **caractérisé par** les caractéristiques suivantes :
- détermination (S31) d'une multitude de premières valeurs de pression durant une première période de temps ;
- détermination (S32) d'un premier rapport signal sur bruit basé sur la multitude de premières valeurs de pression ;
- détermination (S33) d'une multitude de secondes valeurs de pression durant une seconde période de temps suivant chronologiquement la première période de temps;
- détermination (S34) d'un second rapport signal sur bruit basé sur la multitude de secondes valeurs de pression ; et
- émission (SS) d'un signal d'interruption de remplissage lorsque le second rapport signal sur bruit est supérieur au premier rapport signal sur bruit.

4. Procédé selon l'une des revendications précédentes, **caractérisé par** les caractéristiques suivantes :
- détermination (S41) d'une multitude de premières valeurs de pression durant une première période de temps ;
- détermination (S42) d'un premier spectre de fréquences basé sur les premières valeurs de pression ;
- détermination (S43) d'une multitude de secondes valeurs de pression durant une seconde période de temps suivant chronologiquement la première période de temps ;
- détermination (S44) d'un second spectre de fréquences basé sur les secondes valeurs de pression ; et
- émission (SS) d'un signal d'interruption de remplissage lorsque le second spectre de fréquences diffère du premier spectre de fréquences.

5. Procédé selon l'une des revendications précédentes, **caractérisé par** les étapes de procédé suivantes :
- détermination (S51) du fait de savoir si les valeurs de pression présentent un maximum absolu et un minimum absolu suivant ce dernier dans un premier intervalle de temps ; et
- émission (SS) du signal d'interruption de remplissage lorsque le premier intervalle de temps est plus court qu'une période de temps prédéterminée.

6. Procédé selon l'une des revendications précédentes, **caractérisé par** les étapes de procédé suivantes :
- réalisation (S61) d'un filtrage passe-haut des valeurs de pression déterminées par le capteur de pression (40) ; et
- émission (SS) du signal d'interruption de remplissage lorsque les valeurs de pression filtrées par le filtrage passe-haut tombent en dessous d'un seuil inférieur prédéterminé.

7. Procédé selon l'une des revendications précédentes, **caractérisé par** les étapes de procédé suivantes :
- réalisation (S61) d'un filtrage passe-haut des valeurs de pression déterminées par le capteur de pression (40) ;
- détermination (S71) des valeurs absolues des valeurs de pression filtrées par le filtrage passe-haut ; et
- émission (SS) du signal d'interruption de remplissage lorsque les valeurs de pression filtrées par le filtrage passe-haut et converties en valeurs absolues dépassent un seuil supérieur prédéterminé.

8. Procédé selon l'une des revendications précédentes, **caractérisé par** les étapes de procédé suivantes :
- réalisation (S61) d'un filtrage passe-haut des valeurs de pression déterminées par le capteur de pression (40) ;
- détermination (S71) des valeurs absolues des valeurs de pression filtrées par le filtrage passe-haut ; et
- réalisation (S81) d'un filtrage passe-bas des valeurs de pression qui sont d'abord filtrées par le filtrage passe-haut puis converties en valeurs absolues ; et
- émission (SS) du signal d'interruption de remplissage lorsque les valeurs de pression d'abord filtrées par le filtrage passe-haut, puis converties en valeurs absolues et ensuite filtrées par le filtrage passe-bas dépassent un seuil supérieur prédéterminé.

9. Procédé de détection d'arrêt d'un dispositif de remplissage lors d'une opération de remplissage d'un réservoir de liquide de fonctionnement (10), dont l'espace intérieur de réservoir de liquide de fonctionnement (11) peut être rempli d'un liquide de fonctionnement par l'intermédiaire d'un tube de remplissage (20) débouchant dans celui-ci, le système de réservoir de liquide de fonctionnement présentant un capteur d'accélération (50) monté sur le réservoir de liquide de fonctionnement (10) ou le tube de remplissage (20), le procédé présentant les étapes de procédé suivantes :
- détermination (S9) de la variation dans le temps des valeurs d'accélération déterminées par le capteur d'accélération (50) ; et
- émission (SS) d'un signal d'interruption de remplissage en fonction de la variation dans le temps des valeurs d'accélération.

10. Procédé selon la revendication 9, **caractérisé en ce que** le signal d'interruption de remplissage est émis lorsqu'une valeur d'accélération dépasse une valeur limite d'accélération prédéterminée.

11. Procédé de détection d'arrêt d'un dispositif de remplissage lors d'une opération de remplissage d'un réservoir de liquide de fonctionnement (10), dont l'espace intérieur de réservoir de liquide de fonctionnement (11) peut être rempli d'un liquide de fonctionnement par l'intermédiaire d'un tube de remplissage (20) débouchant dans celui-ci, un capteur de débit volumique (60) permettant la détermination d'un débit volumique à l'intérieur du tube de remplissage (20) étant disposé dans le tube de remplissage (20), le procédé comprenant les étapes de procédé suivantes :
- détermination (S11) de la variation dans le temps des valeurs de débit volumique déterminées par le capteur de débit volumique (60) ; et
- émission (SS) d'un signal d'interruption de remplissage en fonction de la variation dans le temps des valeurs de débit volumique.

12. Procédé selon la revendication 11, **caractérisé en ce que** le signal d'interruption de remplissage est émis lorsqu'une valeur de débit volumique tombe en dessous d'une valeur limite de débit volumique prédéterminée.

13. Système de réservoir de liquide de fonctionnement (1) comportant
- au moins un réservoir de liquide de fonctionnement (10),
- un tube de remplissage (20) débouchant dans un espace intérieur de réservoir de liquide de fonctionnement (11) et permettant de remplir le réservoir de liquide de fonctionnement (10) d'un liquide de fonctionnement,
**caractérisé par** les caractéristiques suivantes :
- le système de réservoir de liquide de fonctionnement (1) présente un capteur de pression (40) disposé à l'intérieur du tube de remplissage (20) ;
- le capteur de pression (40) est accouplé à un dispositif de commande électronique (70) par l'intermédiaire d'une ligne de données afin de transmettre des données représentant la pression à l'intérieur du tube de remplissage (20) au dispositif de commande électronique (70) ; et
- le dispositif de commande (70) est conçu pour réaliser un procédé de détection d'arrêt d'un dispositif de remplissage selon l'une des revendications 1 à 8.

14. Système de réservoir de liquide de fonctionnement selon la revendication 13, **caractérisé en ce que** le capteur de pression (40) est installé à l'intérieur du tube de remplissage (20) de telle sorte que le capteur de pression (40) ne fait pas saillie au-delà d'une surface intérieure du tube de remplissage (20).

15. Système de réservoir de liquide de fonctionnement (1) comportant
- au moins un réservoir de liquide de fonctionnement (10),
- un tube de remplissage (20) débouchant dans un espace intérieur de réservoir de liquide de fonctionnement (11) et permettant de remplir le réservoir de liquide de fonctionnement (10) d'un liquide de fonctionnement,
**caractérisé par** les caractéristiques suivantes :
- le système de réservoir de liquide de fonctionnement (1) présente un capteur d'accélération qui est monté au réservoir de liquide de fonctionnement (10) ou au tube de remplissage (20) ;
- le capteur d'accélération est accouplé à un dispositif de commande électronique (70) par l'intermédiaire d'une ligne de données afin de transmettre des données d'accélération au dispositif de commande électronique (70) ; et
- le dispositif de commande (70) est conçu pour réaliser un procédé de détection d'arrêt d'un dispositif de remplissage selon l'une des revendications 9 à 10.

16. Système de réservoir de liquide de fonctionnement (1) comportant
- au moins un réservoir de liquide de fonctionnement (10),
- un tube de remplissage (20) débouchant dans un espace intérieur de réservoir de liquide de fonctionnement (11) et permettant de remplir le réservoir de liquide de fonctionnement (10) d'un liquide de fonctionnement,
**caractérisé par** les caractéristiques suivantes :
- le système de réservoir de liquide de fonctionnement (1) présente un capteur de débit volumique (60) disposé à l'intérieur du tube de remplissage (20) ;
- le capteur de débit volumique (60) est accouplé à un dispositif de commande électronique (70) par l'intermédiaire d'une ligne de données afin de transmettre des données représentant le débit volumique à l'intérieur du tube de remplissage (20) au dispositif de commande électronique (70) ; et
- le dispositif de commande (70) est conçu pour réaliser un procédé de détection d'arrêt d'un dispositif de remplissage selon l'une des revendications 11 à 12.

17. Système de réservoir de liquide de fonctionnement selon l'une des revendications 13 à 16, **caractérisé en ce que** le système de réservoir de liquide de fonctionnement présente une soupape anti-retour (30) par l'intermédiaire de laquelle l'espace intérieur de réservoir de liquide de fonctionnement (11) est en liaison fluidique avec le tube de remplissage (20).
